# EUROPEAN PATENT APPLICATION

(11) **EP 4 793 741 A1**
(43) Date of publication of application: **19.08.2026**
(21) Application number: 26158600.2
(22) Date of filing: 13.02.2026
(51) Int. Cl.: G06F 3/01

(54) **NAVIGATING THROUGH USER INTERFACE ELEMENTS WITH A VARIABLE KINEMATIC PROFILE SWIPE GESTURE**

(30) Priority: 14.02.2025 US 202563758776 P; 11.02.2026 US 202619537383
(71) Applicant: Meta Platforms Technologies, LLC, Menlo Park, CA 94025 (US)
(72) Inventor: Tostado, Pablo, Menlo Park (US); Tiwari, Anoushka, Menlo Park (US); Luongo, Francisco Jose, Menlo Park (US); Ramos Rojas, Julian Andres, Menlo Park (US); Ohayon, Shay, Menlo Park (US); Jota Costa, Ricardo Jorge, Menlo Park (US); Ranjan, Tanvi, Menlo Park (US)
(74) Representative: Murgitroyd & Company

(57) **Abstract**

A method of navigating through one or more user interface elements is described. The method includes displaying a plurality of user interface (UI) elements, obtaining data generated during performance of a first swiping motion of a thumb over an index finger, the first swiping motion having a first kinematic profile, and based on the first kinematic profile, causing movement of a focus selector at a first rate through a first set of the plurality of UI elements. The method further includes obtaining additional data generated during performance of a second swiping motion of the thumb over the index finger, the second swiping motion having a second kinematic profile different than the first kinematic profile, and based on the second kinematic profile, causing movement of the focus selector at a second rate through a second set of the plurality of UI elements.

## Description

### TECHNICAL FIELD

This relates generally to wearable device input systems, and more particularly to detecting and interpreting variable-kinematic profile hand gestures for navigating user interface elements.

### BACKGROUND

Wearable devices have become increasingly prevalent as input mechanisms for interacting with electronic devices and user interfaces. These wearable devices may detect hand gestures performed by users to enable navigation through user interface elements, selection of items, and other interactions. Gesture-based input modalities offer advantages in terms of hands-free operation and natural interaction paradigms, particularly in contexts such as extended-reality environments where traditional input mechanisms may be impractical or unavailable.

However, wearable devices are worn by a diverse group of users who may perform hand gestures with different levels of intensity, speed, force, and displacement.

As such, there is a need to address one or more of the above-identified challenges. A brief summary of solutions to the issues noted above are described below.

### SUMMARY

Individual users may have varying physical characteristics, motor control abilities, and personal preferences that affect how they perform gestures. Generic gesture recognition models may not suit every user out of the box and may not provide a level of precision demanded by everyday users. Therefore, existing gesture-based navigation approaches may be benefited by techniques for providing sufficient granularity in responding to variations in gesture performance.

According to an aspect, there is provided a non-transitory computer-readable storage medium, comprising executable instructions, that when executed by one or more processors, cause the one or more processors to perform:
displaying a plurality of user interface, UI, elements at a user interface;
obtaining, via one or more neuromuscular signal sensors, data generated during performance of a first swiping motion of a thumb over an index finger, the first swiping motion having a first kinematic profile;
based on the first kinematic profile, causing movement of a focus selector at a first rate through a first set of the plurality of UI elements, wherein the first rate is associated with respective swiping motions below an intensity threshold;
obtaining, via the one or more neuromuscular signal sensors, additional data generated during performance of a second swiping motion of the thumb over the index finger, the second swiping motion having a second kinematic profile different than the first kinematic profile; and
based on the second kinematic profile, causing movement of the focus selector at a second rate through a second set of the plurality of UI elements, wherein the second rate is greater than the first rate, and wherein the second rate is proportional to an intensity associated with the second kinematic profile, and wherein the second set includes more UI elements than the first set.

In one embodiment, the non-transitory computer-readable storage medium further comprises executable instructions that cause the one or more processors to perform:
receiving, via the one or more neuromuscular signal sensors, further data generated during performance of a third swiping motion of the thumb, the third swiping motion having a third kinematic profile different than the second kinematic profile; and
based on the third kinematic profile, causing movement of the focus selector at a third rate through a third set of the plurality of UI elements, wherein the third rate is greater than the second rate, and wherein the third set includes more UI elements than the second set.

In one embodiment, the first kinematic profile and the second kinematic profile are each based on one or more of a position, a velocity, an acceleration, or a displacement of the thumb during the respective swiping motion.

In one embodiment, the first swiping motion is in a first direction, and wherein the second swiping motion is in the first direction.

In one embodiment:
the intensity threshold is associated with respective swiping motions in the first direction, and
another intensity threshold is associated with respective swiping motions in a different direction than the first direction.

In one embodiment, the non-transitory computer-readable storage medium further comprises executable instructions that cause the one or more processors to perform:
receiving, via the one or more neuromuscular signal sensors, further data generated during performance of a third swiping motion of the thumb in a second direction opposite the first direction; and
in accordance with a determination that the third swiping motion is in the second direction, one or more of:
   causing movement of the focus selector in a direction opposite to the movement caused by the first swiping motion; or
   ceasing the movement of the focus selector through the plurality of UI elements.

In one embodiment, the non-transitory computer-readable storage medium further comprises executable instructions that cause the one or more processors to perform:
receiving, via the one or more neuromuscular signal sensors, subsequent data generated during performance of a fourth swiping motion of the thumb in a third direction different from the first direction and the second direction; and
in accordance with a determination that the fourth swiping motion is in the third direction, causing movement of the focus selector in a direction corresponding to the third direction.

In one embodiment, the third direction is a diagonal direction, and wherein causing movement of the focus selector in the direction corresponding to the third direction comprises causing movement of the focus selector through a two-dimensional arrangement of the plurality of UI elements.

In one embodiment, the non-transitory computer-readable storage medium further comprises executable instructions that cause the one or more processors to perform:
detecting, via the one or more neuromuscular signal sensors, a force applied by the thumb to a surface of the index finger during the first swiping motion; and
in accordance with a determination that the force exceeds a force threshold, increasing the first rate of movement of the focus selector.

In one embodiment, the non-transitory computer-readable storage medium further comprises executable instructions that cause the one or more processors to perform:
detecting, via the one or more neuromuscular signal sensors, a compression force applied by the thumb against the index finger during the first swiping motion or the second swiping motion; and
in accordance with a determination that the compression force exceeds a compression threshold, causing a modification to the movement of the focus selector, wherein the modification comprises one or more of increasing the first rate or the second rate, decreasing the first rate or the second rate, or stopping the movement of the focus selector.

In one embodiment, the non-transitory computer-readable storage medium further comprises executable instructions that cause the one or more processors to perform:
while the thumb remains in contact with the index finger during the first swiping motion or the second swiping motion, detecting, via the one or more neuromuscular signal sensors, a tap gesture performed by the thumb; and
in response to detecting the tap gesture, selecting a UI element of the plurality of UI elements currently highlighted by the focus selector.

In one embodiment, the tap gesture is detected based on a transient increase in force applied by the thumb to the index finger during the first swiping motion or the second swiping motion.

In one embodiment, the user interface is presented at an extended-reality headset communicatively coupled to a wrist-wearable device that includes the one or more neuromuscular signal sensors, wherein the extended-reality headset is at least one of augmented-reality glasses or a mixed-reality headset.

According to another aspect, there is provided a non-transitory computer-readable storage medium, comprising executable instructions, that when executed by one or more processors, cause the one or more processors to perform:
receiving, via one or more neuromuscular signal sensors, a first set of calibration data generated during performance of one or more swipe hand gestures performed in response to a first type of gesture prompt;
receiving, via the one or more neuromuscular signal sensors, a second set of calibration data generated during performance of one or more other swipe hand gestures performed in response to a second type of gesture prompt, the second type of gesture prompt different than the first type of gesture prompt; and
applying a bimodal distribution to the first set of calibration data and the second set of calibration data to determine an intensity threshold for differentiating the one or more other swipe hand gestures from the one or more swipe hand gestures.

In one embodiment, the non-transitory computer-readable storage medium further comprises executable instructions that cause the one or more processors to perform:
before receiving the first set of calibration data, displaying a swipe gesture calibration module configured to determine the intensity threshold for differentiating the one or more other swipe hand gestures from the one or more swipe hand gestures.

According to a further aspect, there is provided a system comprising:
a wrist-wearable device including one or more neuromuscular signal sensors; and
a head-wearable device configured to present a user interface including a plurality of user interface, UI, elements;
wherein the system is configured to:
   receive, via the one or more neuromuscular signal sensors, data generated during performance of a first swiping motion of a thumb over an index finger, the first swiping motion having a first kinematic profile;
   based on the first kinematic profile, cause movement of a focus selector at a first rate through a first set of the plurality of UI elements;
   receive, via the one or more neuromuscular signal sensors, additional data generated during performance of a second swiping motion of the thumb over the index finger, the second swiping motion having a second kinematic profile different than the first kinematic profile; and
   based on the second kinematic profile, cause movement of the focus selector at a second rate through a second set of the plurality of UI elements, wherein the second rate is greater than the first rate, and wherein the second set includes more UI elements than the first set.

In one embodiment, the system is further configured to:
receive, via the one or more neuromuscular signal sensors, further data generated during performance of a third swiping motion of the thumb, the third swiping motion having a third kinematic profile different than the second kinematic profile; and
based on the third kinematic profile, cause movement of the focus selector at a third rate through a third set of the plurality of UI elements, wherein the third rate is greater than the second rate, and wherein the third set includes more UI elements than the second set.

In one embodiment:
the first kinematic profile and the second kinematic profile are each based on one or more of a position, a velocity, an acceleration, or a displacement of the thumb during the respective swiping motion.

In one embodiment:
the first swiping motion is in a first direction, and wherein the second swiping motion is in the first direction and the system is further configured to:
receive, via the one or more neuromuscular signal sensors, further data generated during performance of a third swiping motion of the thumb in a second direction opposite the first direction; and
in accordance with a determination that the third swiping motion is in the second direction, one or more of:
   cause movement of the focus selector in a direction opposite to the movement caused by the first swiping motion; or
   cease the movement of the focus selector through the plurality of UI elements. In one embodiment, the system is further configured to:
      detect, via the one or more neuromuscular signal sensors, a force applied by the thumb to a surface of the index finger during the first swiping motion; and
      in accordance with a determination that the force exceeds a force threshold, increase the first rate of movement of the focus selector.

One or more examples of detecting personalized hand gestures configured to enhance the functionality of swipes and disambiguate a regular swipe hand gesture from a power swipe hand gesture is described herein. The example device includes a non-transitory computer-readable storage medium, including executable instructions, that when executed by one or more processors, cause the one or more processors to perform one or more operations. The operations include displaying a plurality of user interface (UI) elements at a user interface, receiving, via one or more neuromuscular signal sensors, data generated during performance of a swipe hand gesture, and determining a magnitude of the swipe hand gesture. The operations further include, accordance with a determination that the magnitude of the swipe hand gesture is a first magnitude, scroll through a set of the plurality of UI elements displayed in a user interface and in accordance with a determination that the magnitude of the swipe hand gesture is a second magnitude, larger than the first, scroll through another set of the plurality of UI elements. The magnitude of the swipe hand gesture is proportional to the number of UI elements in the set and/or the other set.

One example of using a personalized approach to determining when a user is performing a power swipe hand gesture is described herein. The example device includes a non-transitory computer-readable storage medium, including executable instructions, that when executed by one or more processors, cause the one or more processors to perform one or more operations. The operations include receiving, via one or more neuromuscular signal sensors, a first set of calibration data generated during performance of a swipe hand gesture with a first magnitude, receiving, via one or more neuromuscular signal sensors, a first set of calibration data generated during performance of a swipe hand gesture with a first magnitude, and applying a bimodal distribution to the first set of data and the second set of data to determine a threshold for differentiating the swipe hand gesture from the power swipe hand gesture.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1D illustrate a wrist-wearable device detecting swipe hand gestures configured to scroll through one or more user interface elements (UI), in accordance with some embodiments.
Figures 2A-2C illustrate a swipe hand gesture calibration module determining the magnitude for a power swipe hand gesture, in accordance with some embodiments.
Figures 3A-3D illustrate a hand performing a swipe hand gesture while wearing a wrist-wearable device, in accordance with some embodiments.
Figure 4 illustrates a method 400 for navigating through user interface elements using variable-magnitude swiping motions, in accordance with some embodiments.
Figures 5A, 5B, 5C-1, and 5C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO2) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Detecting Power Swipe Hand Gestures Performed by a User

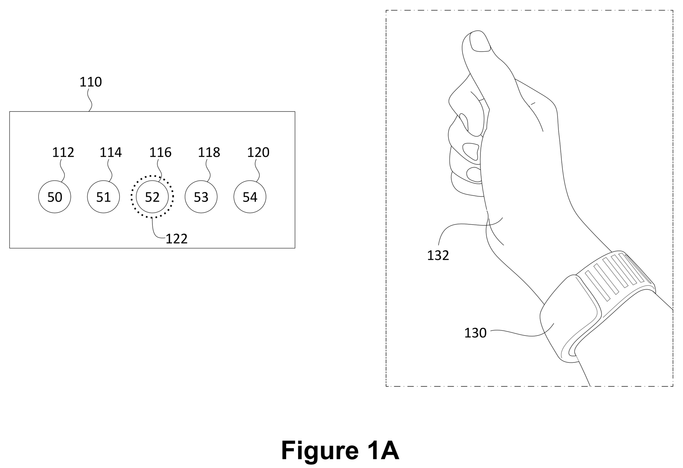

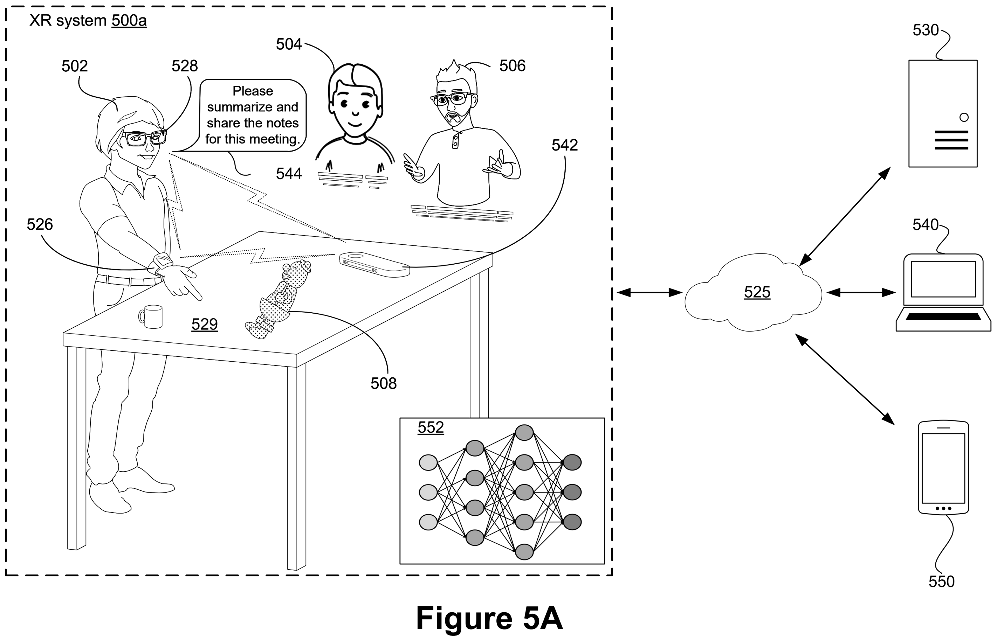

Figures 1A-1D illustrate a wrist-wearable device detecting swipe hand gestures configured to scroll through one or more user interface elements (UI), in accordance with some embodiments. Figure 1A illustrates a plurality of user UI elements (e.g., UI elements 112-120) displayed on a user interface 110, in accordance with some embodiments. In some embodiments, the UI elements 112-120 include a series of numbers as shown in Figure 1A, but the plurality of UI elements can also include a list of items and/or one or more images. In some embodiments, the user interface 110 can include a two-dimensional or three-dimensional navigational space that can include various UI elements at discrete points within the respective navigational space, rather than explicit listings of UI elements as shown herein. Figure 1A further includes a UI selector 122 which highlights the currently selected UI element (e.g., the UI element 116 is highlighted in Figure 1A). In some embodiments, the user interface 110 is displayed at a head-wearable device (AR device 528; Figures 5A) or at the display of a wrist-wearable device (wrist-wearable device 526; Figures 5A). Figure 1A further illustrates a wrist-wearable device 130 including one or more neuromuscular signal sensors coupled with the wrist of a user configured to detect one or more hand gestures performed by a hand 132 of the user. Although the embodiments described herein illustrate hand gestures detected by neuromuscular signal sensors, one of skill in the art will appreciate that other sensors can be used in addition or alternatively to the neuromuscular signal sensors described herein. For example, data obtained by an IMU sensor of the wrist-wearable device, and/or imaging sensors located at either or both of the wrist-wearable device 130 or another device (e.g., the AR device 528) that is communicably coupled with the wrist-wearable device 130 may be used to identify respective gestures performed by the user.

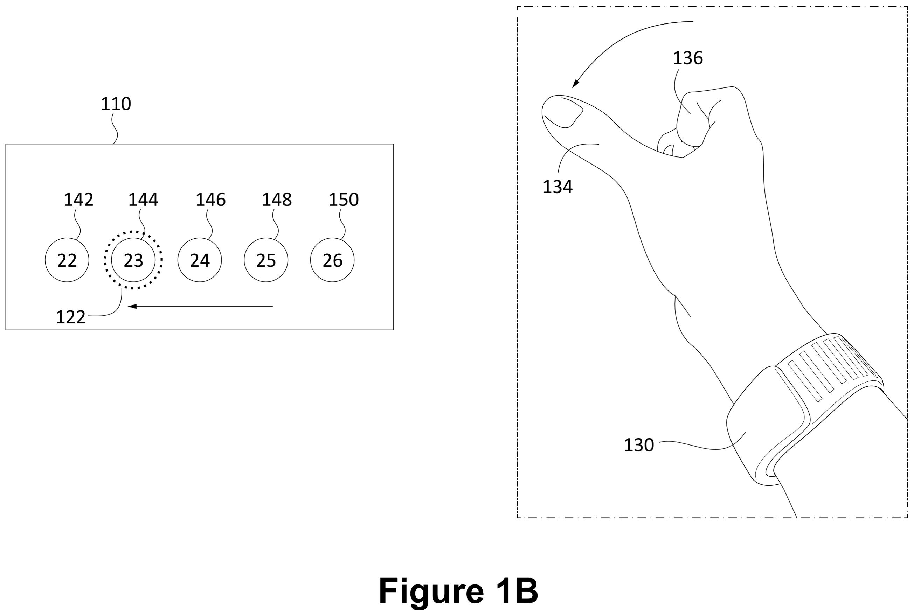

Figure 1B illustrates a user performing a power swipe hand gesture, in accordance with some embodiments. Figure 1B illustrates a plurality of user UI elements (e.g., UI elements 142-150) displayed on a user interface 110, in accordance with some embodiments. In some embodiments, a swipe hand gesture is performed by sliding one of the user's phalanges (e.g., the thumb 134) in a first direction (e.g., to the left). The thumb can slide across another phalange (e.g., the pointer finger 136) or across a surface such as a table. In some embodiments, the swipe gesture includes a thumb movement above a respective other phalange or surface, such that the swipe gesture does not include a contact with another body part or other object. The user can perform the swipe hand gesture with different kinematic profiles representing force, velocity, acceleration, and displacement. For example, the user can swipe their thumb across the pointer finger 136 quickly or at a more moderate speed, with significant force or gently, etc. The data received at the neuromuscular signals can be used to determine the kinematic profile of the swipe hand gesture. For example, Figure 1B further illustrates the user sliding their thumb 134 across the pointer finger and ending the swipe several centimeters (e.g., 1-5 cm) away from the pointer finger 136. The displacement of the thumb indicates that this is a power swipe hand gesture. In some embodiments, one or more intensity thresholds may be used to determine whether a particular gesture constitutes a power swipe gesture. In response to the power swipe hand gesture, the UI selector 122 scrolls through several (e.g., 10+ UI elements) UI elements at a rate that is proportional to the kinematic profile of the power swipe hand gesture. For example, in Figure 1A the UI selector 122 was highlighting the UI element 116 displaying a 52 and in Figure 1B in response to the power swipe hand gesture, the UI selector 122 is highlighting the UI element 144 with a 23 displayed.

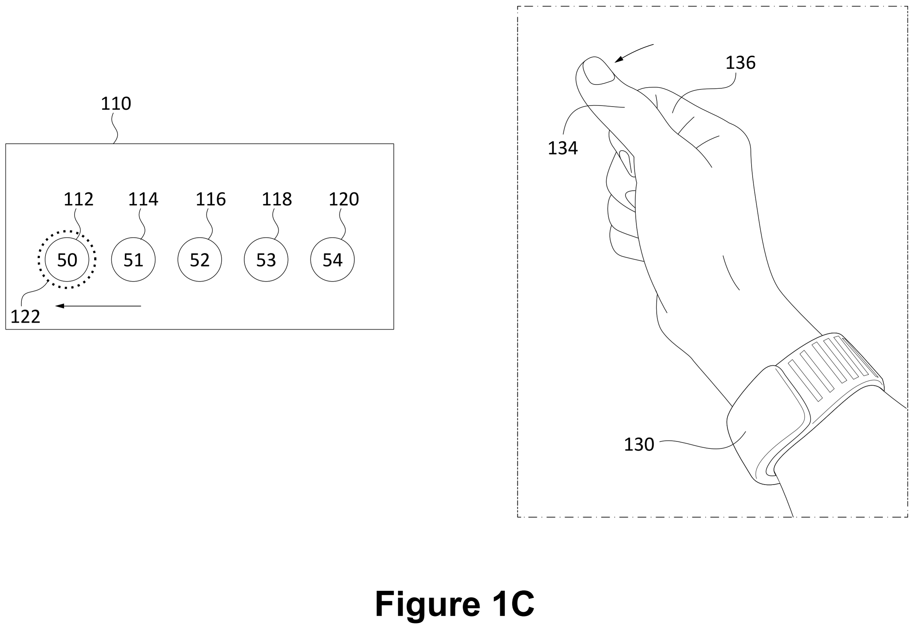

Figure 1C illustrates the user performing a gentle swipe hand gesture, in accordance with some embodiments. Figure 1C illustrates the plurality of user UI elements (e.g., UI elements 112-120) displayed on a user interface 110, in accordance with some embodiments. Figure 1C further illustrates the user's thumb 134 sliding across the user's pointer finger 136 with a different kinematic profile than the kinematic profile of the power swipe gesture shown in Figure 1B (e.g., less displacement, less velocity, less force, etc.). For example, in contrast to the power swipe hand gesture performed in Figure 1B, the user's thumb 134 has not surpassed the user's pointer finger 136. In accordance with some embodiments, the UI selector 122 is caused to move at a different rate through the UI elements presented in the user interface 110 than the rate of movement of the UI selector 122 in response to the power swipe gesture shown in Figure 1B. For example, as shown in Figure 1C, the UI selector 122 started at UI element 116 and the UI selector 122 was only displaced two places to the left in response to the gentler swipe gesture. In some embodiments, when a swipe gesture fails to satisfy one or more intensity criteria (e.g., associated with a respective kinematic profile of the gesture) for performing a power swipe gesture, a focus selector or other navigational element within the user interface is caused to move at a particular rate (e.g., a predefined increment) that is not proportional to an intensity associated with the kinematic profile of the swipe gesture.

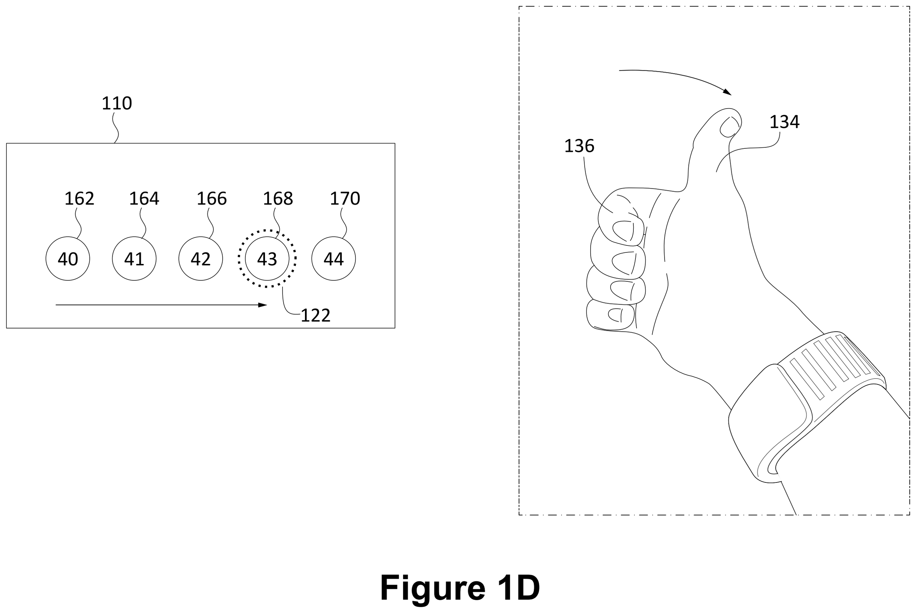

Figure 1D illustrates the user performing a power swipe hand gesture in another direction, in accordance with some embodiments. Figure 1D illustrates the plurality of user UI elements (e.g., UI elements 162-170) displayed on a user interface 110, in accordance with some embodiments. Figure 1D further illustrates the user performing the power swipe gesture in a direction opposite the direction shown in Figures 1B-1C (e.g., to the right instead of to the left). In some embodiments, the UI selector 122 moves in the direction corresponding to the direction of the swipe hand gesture. For example, the UI selector 122 moves to the right several numbers to UI element 168 in response to the power slide gesture direction which is performed to the right. As described in Figure 1B, the user sliding their thumb 134 across the pointer finger 136 and ending the swipe several centimeters (e.g., 1-5 cm) away from the pointer finger 136 indicates a power swipe gesture is being performed. Figure 1D shows the user's thumb 134 several centimeters (e.g., 3+ cm) from the user's pointer finger 136. The displacement of the thumb 134 indicates that this is a power swipe hand gesture. In some embodiments, a different set of one or more intensity threshold is used to determine that the gesture shown in Figure 1D is a power swipe gesture than the set of one or more intensity thresholds that is used to determine that the gesture shown in Figure 1B is a power swipe gesture, which may be based on the direction of the thumb movement. That is, in some embodiments, particular thresholds used for identifying power swipe gestures are directionally-specific. In some embodiments, when the user performs a swipe hand gesture in the opposite direction of the swipe hand gesture previously performed, the UI elements cease to scroll.

In some embodiments, the kinematic profile of the swipe hand gesture is determined based on data from the neuromuscular signal sensors, such as electromyography (EMG) sensors. The system may read EMG activity in real time and identify EMG activity patterns that correspond to specific gestures. In some embodiments, a regression model trained on multi-user data is used to classify swipes and predict swipe intensity using EMG recordings. When a thumb 134 swipe is detected, the model estimates the intensity of the swipe and triggers corresponding scrolling actions. The kinematic profile determination may be based on signal amplitude, frequency characteristics, pattern recognition, or combinations thereof.

In some embodiments, the user may receive feedback during or after performing a swipe hand gesture. The feedback may include visual indicators displayed at the user interface showing scroll speed, scroll position, or the number of UI elements being traversed. In some embodiments, haptic feedback is provided via the wrist-wearable device to confirm gesture recognition and/or indicate the detected kinematic profile of the gesture. Audio cues may also be provided to indicate successful gesture detection or to convey information about the scrolling behavior. In some embodiments, the techniques described herein are configured to be performed at a device that does not include a display, for example, a user may be able to navigate through a playlist of musical content using the gesture detection techniques described herein without the system providing any visual indication of the movement through the playlist, and the system may be configured to provide audio output to indicate to the user the effect a particular gesture (e.g., "moving from song 1 to song 6 in your workout playlist based on the detected power swipe gesture").

In some embodiments, the scrolling through UI elements may be continuous, providing a smooth animation as the UI selector moves through the plurality of UI elements. Alternatively, the scrolling may be discrete, with the UI selector jumping between UI elements in increments. The scrolling speed may be proportional to the intensity of the swipe gesture, such that a higher-kinematic-profile swipe results in faster scrolling and a lower-kinematic-profile swipe results in slower scrolling. In some embodiments, the system supports multiple discrete scrolling speeds (e.g., three or more different speeds) corresponding to different ranges of gesture kinematic profile.

In some embodiments, alternative sensor modalities may be used to detect gesture kinematic profile in addition to or instead of neuromuscular signal sensors. For example, computer-vision models using cameras (e.g., cameras of a head-wearable device such as a VR headset) may track finger movements to determine swipe intensity. Wearables with touch or force sensors, such as gloves, may also be used to detect gesture kinematic profile. Other sensor types that may be used include capacitive sensors, strain sensors, and inertial measurement units (IMUs). The EMG-based approach may provide advantages in that it allows for interaction in various hand positions, including when the user's hand is in a pocket or otherwise not visible to cameras.

In some embodiments, the plurality of UI elements that can be navigated using the variable-kinematic-profile swipe gesture may include various types of content. For example, the UI elements may include media playlists (e.g., a list of movies in a streaming service, a list of songs in a music application), calendar dates, map regions, photo galleries, volume or brightness controls, text documents, web pages, and vertical scrolling content on phone screens or other displays. The variable-kinematic-profile swipe gesture may be used to navigate through long lists of items, providing a more efficient user experience compared to single-item scrolling.

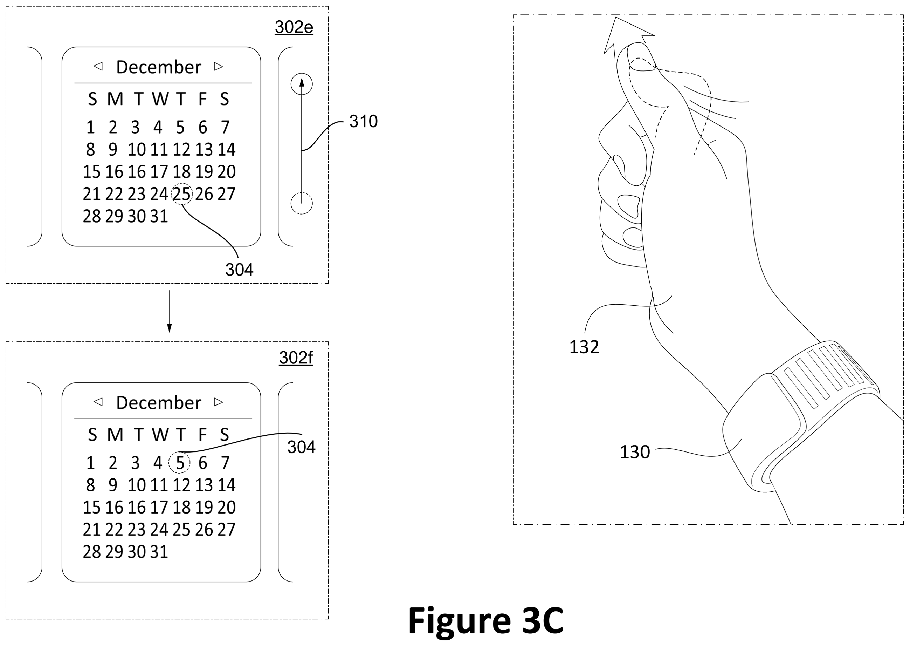

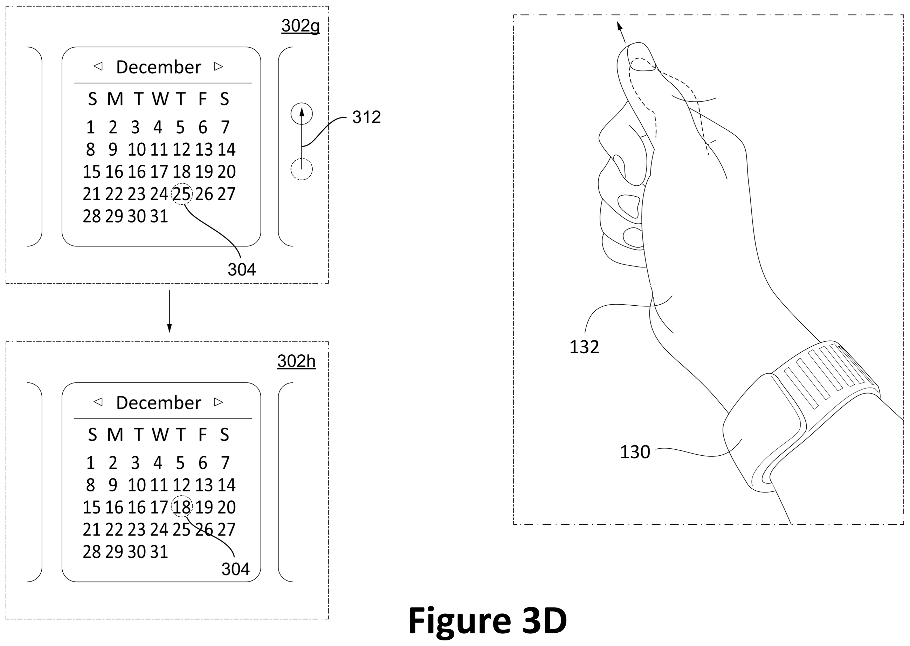

In some embodiments, the swipe hand gesture may be performed using finger combinations other than the thumb 134 sliding across the pointer finger 136. For example, the swipe may be performed by the thumb 134 sliding across multiple fingers, across the palm, or across other body surfaces. Vertical swipes (e.g., up, or down) and diagonal swipes are also contemplated, which may be used to navigate two-dimensional UI layouts or to scroll through content in different directions. As illustrated in Figures 3C and 3D, the swipe gesture may be used to navigate calendar interfaces, where the kinematic profile of the swipe determines how many dates or weeks are traversed.

In some embodiments, the system determines when a swipe gesture has ended based on the neuromuscular signal data and/or other sensor data. The gesture termination may be detected when the EMG activity associated with the swipe motion falls below a threshold or when the kinematic state indicates that the swiping motion has ceased. In some embodiments, momentum-based scrolling is implemented such that the UI elements continue to scroll after the gesture ends, with the scrolling speed gradually decreasing over time. The user may perform a swipe gesture in the opposite direction to stop the momentum-based scrolling, as described above with reference to Figure 1D.

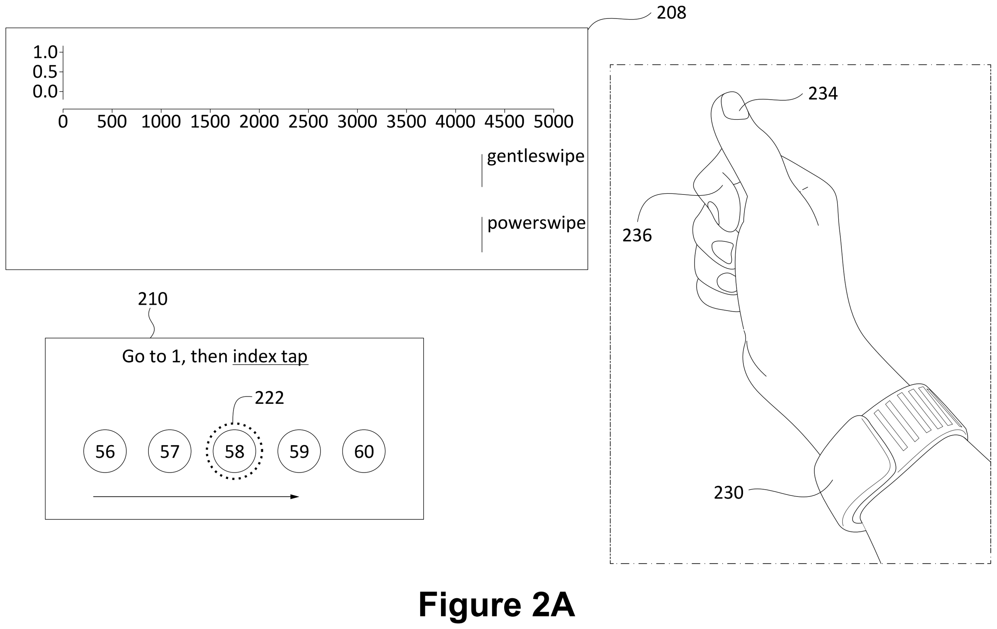

Figures 2A-2C illustrates a swipe hand gesture calibration module determining the magnitude for a power swipe hand gesture, in accordance with some embodiments. The swipe hand gesture calibration module 208 includes a graph with a vertical axis representing force measurements ranging from 0.0 to 1.0 and a horizontal axis representing time. The graph displays visual indicators for gentle swipe and power swipe classifications, allowing the user and the system to visualize the force profile of each performed gesture. In some embodiments, users go through a plurality of prompter screens (e.g., perform a swipe hand gesture to swipe to the number 1) and are asked to perform what they consider to be right or left swipes. Furthermore, the prompter screen prompts the user to envision swiping through one or UI elements at a time. While gathering the data on the swipe and power swipe hand gestures, a bimodal distribution may be developed, where each respective mode of the bimodal distribution is associated with either gentle swipe gestures or power swipe gestures performed by the user. In some embodiments a threshold that best separates the respective modes of the bimodal distribution is identified. In some embodiments, different bimodal distributions are obtained for gestures performed in different directions, such that the system identifies distinct thresholds (e.g., one for left and one for right) for swipe hand gestures performed in different directions. This method considers the natural differences in thumb movement when swiping inward versus outward which affects their respective force profiles.

In the personalization approach, users are asked to perform a gentle swipe hand gesture and a power swipe hand gesture in both directions at their own pace and in any sequence they chose. In some embodiments, the system uses k-means clustering to determine in real time the centroids of two classes (e.g., the average peak-covariance-norm of swipe and power swipes) and set a threshold between the two points (e.g., the swipe and power swipe hand gesture) to classify swipes. This approach yields therefore a single threshold to disambiguate swipes versus power-swipes in any direction.

Figure 2A illustrates a swipe hand gesture calibration module 208 prior to receiving data from the wrist-wearable device 230 in response to a swipe hand gesture performed by the user's thumb 234 and the user's pointer finger 236. The swipe hand gesture calibration module 208 includes a graph configured to display kinematic profile measurements (e.g., force measurements) over time as the user performs calibration gestures. The user interface 210 displays a series of UI elements including several numbers, arranged horizontally with an arrow indicating a direction of movement. The UI selector 222 includes analogous features to the UI selector 122 described in Figures 1A-1D and is configured to move in response to a swipe hand gesture detected by the wrist-wearable device 230. The UI selector 222 is shown as a dotted circle highlighting a UI element (e.g., number 58), indicating the currently selected element. The user interface 210 further includes a prompt configured to prompt the user to perform a swipe hand gesture (e.g., "Go to 1, then index tap") such that the swipe hand gesture calibration module 208 may determine what type of swipe hand gesture the user is performing (e.g., a gentle swipe hand gesture versus a power swipe hand gesture).

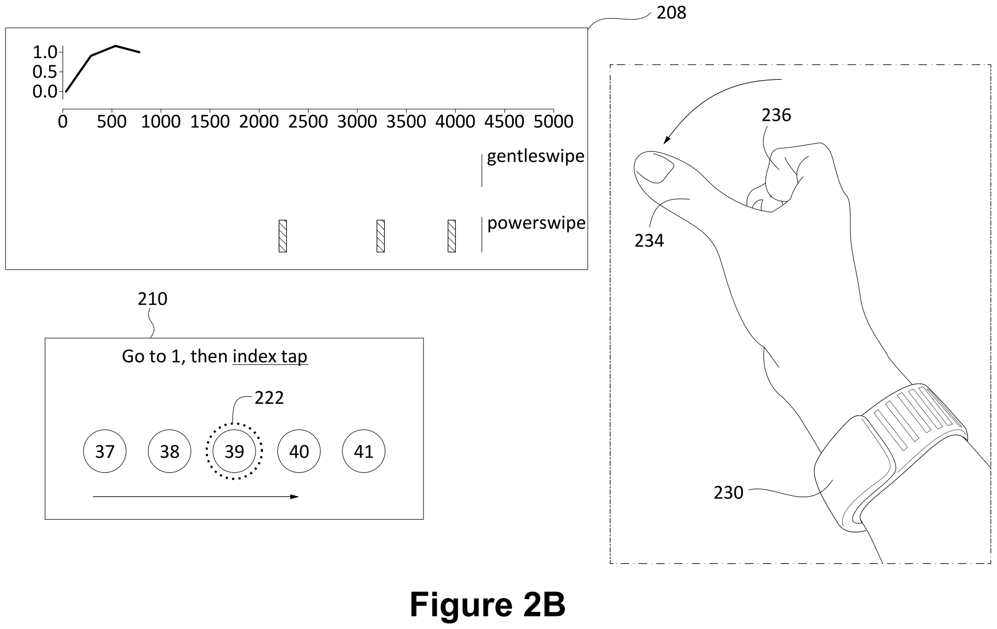

Figure 2B illustrates the swipe hand gesture calibration module 208 capturing multiple power swipe hand gestures, in accordance with some embodiments. Figure 2B further illustrates the wrist-wearable device 230 capturing calibration data via the one or more neuromuscular signal sensors while the user performs a swipe hand gesture. In response to the swipe hand gesture, the swipe hand gesture calibration module 208 determines the kinematic profile (e.g., force, velocity, acceleration, and/or displacement) used to perform the swipe hand gesture and graphs it as illustrated in Figure 2B. The graph shows a curve that rises and plateaus near the 1.0 value, indicating the kinematic profile of a power swipe hand gesture. Multiple rectangular markers are shown under the power swipe label representing detected power swipe gestures. Based on the kinematic profile used to perform the swipe hand gesture, the swipe hand gesture calibration module 208 classifies the swipe hand gesture as a power swipe gesture or a gentle swipe gesture. The swipe hand gesture performed in Figure 2B has a measured kinematic profile indicating it is a power swipe hand gesture. The user interface 210 displays the prompt "Go to 1, then index tap" along with a series of numbered UI elements (e.g., displaying values 37, 38, 39, 40, and 41). The UI selector 222 moves proportional to the kinematic profile used in the power swipe hand gesture as described in Figures 1A-1D. A bimodal distribution is applied to each swipe hand gesture to determine whether or not the swipe hand gesture should be classified as a gentle or power hand gesture.

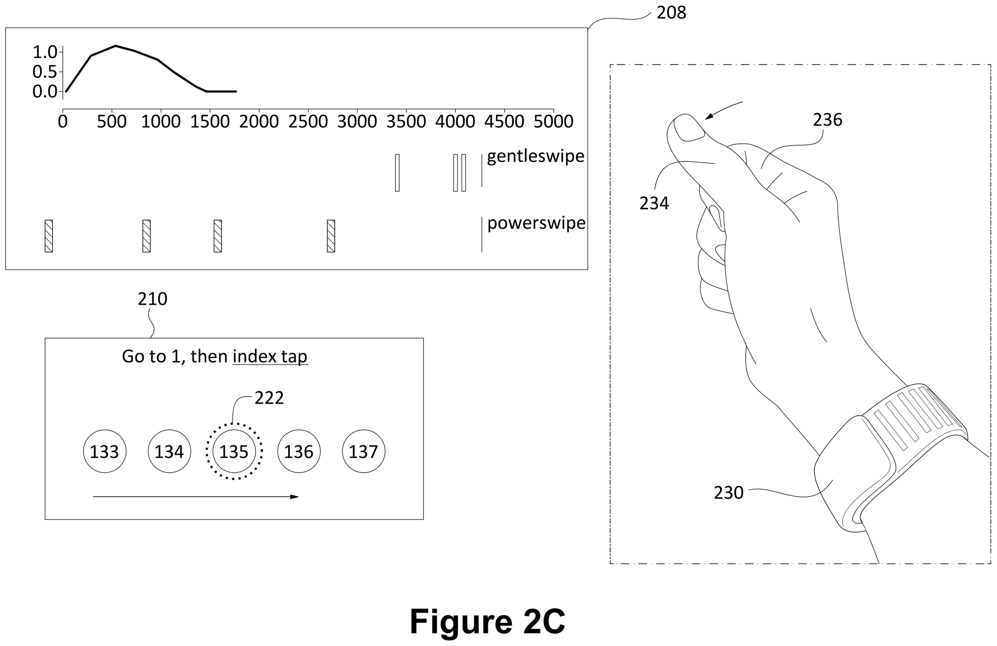

Figure 2C illustrates the swipe hand gesture calibration module 208 capturing a gentle swipe hand gesture, in accordance with some embodiments. Figure 2C further illustrates the swipe hand gesture calibration module 208 determining the kinematic profile (e.g., force) used to perform the swipe hand gesture is below a threshold and classifies the swipe hand gesture as a gentle swipe gesture. The graph shows a curve that peaks near 1.0 around the 500 mark on the horizontal axis and then decreases to approximately 0.0 by the 2000 mark, representing the kinematic profile of a gentle swipe where the force is applied briefly and then released. As illustrated in the graph, when the gentle hand gesture is performed, a lower kinematic profile is detected than when the user is performing a power swipe hand gesture. On the graph, the power swipe hand gestures have a value of about 1 and the gentle swipe gestures have a value between 0 and 0.5. The user interface 210 displays a series of UI elements including first UI element 133, third UI element 15, and fifth UI element 137. The UI selector 222 is shown as a dotted circle highlighting the third UI element 15. The thumb 234 is positioned near the pointer finger 236 in a gesture position demonstrating a gentle swipe where the thumb has not extended beyond the pointer finger. The determination of the classification of the swipe hand gesture includes applying a bimodal distribution as described above. In some embodiments, while force is shown as an example kinematic profile parameter in Figures 2A-2C, the kinematic profile may include other parameters such as velocity, acceleration, displacement, or combinations thereof.

In some embodiments, the swipe hand gesture calibration module 208 may display real-time feedback to the user during calibration, showing the classification of each performed gesture and allowing the user to see how their gestures are being interpreted by the system. The real-time feedback may include visual indicators on the graph showing where each gesture falls relative to the threshold between gentle swipe and power swipe classifications. In some embodiments, the calibration module may provide guidance to the user if the performed gestures are not sufficiently distinct, such as prompting the user to perform the power swipe gesture with a higher kinematic profile (e.g., more force or greater displacement) or the gentle swipe gesture with a lower kinematic profile. The feedback mechanism may help users understand the expected gesture characteristics and improve the accuracy of the calibration process.

In some embodiments, the kinematic profiles may be direction-specific, such that a swipe in a first direction (e.g., leftward, or inward toward the palm) is associated with a first kinematic profile threshold, and a swipe in a second direction (e.g., rightward, or outward away from the palm) is associated with a second kinematic profile threshold. The first and second kinematic profile thresholds may be different from one another due to natural differences in thumb movement when swiping inward versus outward, which affects the respective kinematic profiles. For example, the kinematic profile for an inward swipe may differ from the kinematic profile for an outward swipe because the range of motion, muscle activation patterns, and force profiles may vary depending on the direction of the swipe. In some embodiments, the calibration module may prompt the user to perform swipe hand gestures in each of a plurality of directions (e.g., left, right, up, down, diagonal) to capture direction-specific calibration data and determine separate kinematic profile thresholds for each direction. This direction-specific calibration may improve classification accuracy by accounting for the natural biomechanical differences in how users perform swipe gestures in different directions.

In some embodiments, the calibration data may include kinematic profiles of respective gestures performed in response to visual prompts presented within a calibration user interface. The kinematic profiles may capture characteristics such as velocity, acceleration, displacement, and force associated with each gesture performed during the calibration process. The visual prompts may instruct the user to perform specific types of swipe hand gestures, such as gentle swipes or power swipes, allowing the system to associate the captured kinematic profiles with the corresponding gesture classifications.

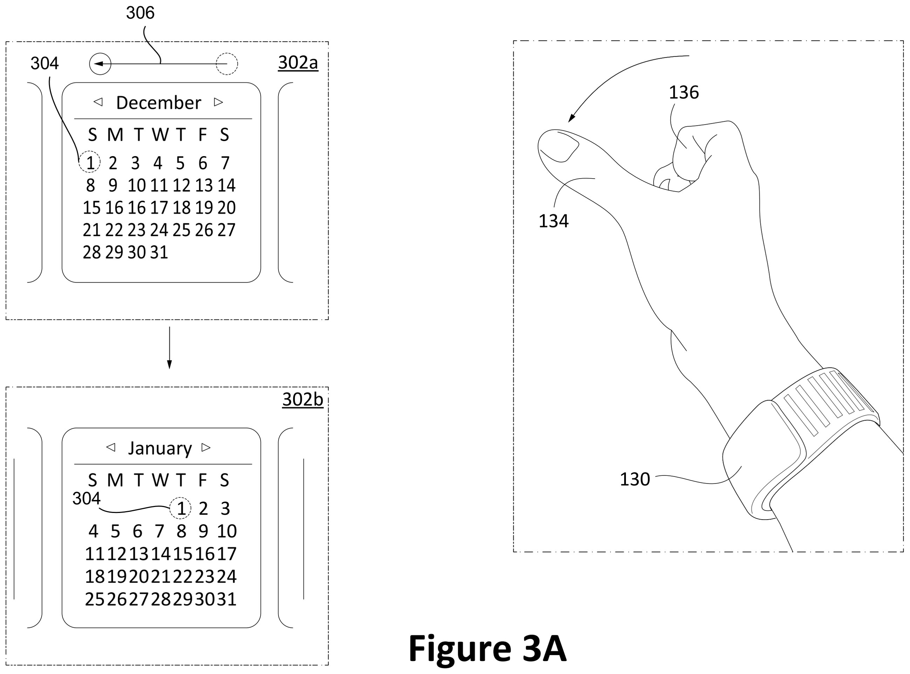

Figure 3A illustrates a user interface transition resulting from a power swipe gesture performed while wearing a wrist-wearable device 130, in accordance with some embodiments. The figure shows a user's hand with the thumb 134 positioned to perform a swiping motion across the pointer finger 136. The wrist-wearable device 130 is shown worn on the user's wrist and includes one or more neuromuscular signal sensors configured to detect hand gestures performed by the user. The thumb 134 is depicted in a position indicating movement in an upward arc direction relative to the pointer finger 136, as indicated by the curved arrow.

In the first UI display 302a, the UI selector 304 is positioned on December 1st on the display of the wrist-wearable device (e.g., or another device including the head-wearable device). The wrist-wearable device 130 receives data generated during performance of the swipe hand gesture and determines a kinematic profile of the swipe hand gesture based on the swiping motion of the thumb 134 over the pointer finger 136. Following detection of a power swipe gesture, where the user's input exceeds the kinematic profile threshold determined as described in connection with Figures 2A-2C, the second UI display 302b shows the UI selector 304 has advanced by one full month to January 1st. The transition from the first UI display 302a to the second UI display 302b demonstrates that the power swipe gesture causes the UI selector 304 to move a larger increment (e.g., one full month) compared to a standard swipe gesture, which may cause the UI selector 304 to move a smaller increment (e.g., one day or one week). The kinematic profile of the swipe hand gesture can be used to control scrolling through user interface elements, where the scrolling rate and increment are proportional to the detected kinematic profile of the gesture.

In some embodiments, the UI selector 304 may provide visual feedback indicating the type of swipe gesture detected. For example, the UI selector 304 may be displayed with a first visual appearance (e.g., a first color, size, or animation) when a standard swipe gesture is detected, and a second visual appearance (e.g., a second color, size, or animation) when a power swipe gesture is detected. The visual feedback may help the user understand how their gesture was interpreted by the system. In some embodiments, the increment of movement caused by the swipe gesture may be configurable by the user. For example, the user may configure a power swipe to advance by one month, one week, or another user-defined increment. Similarly, the user may configure a standard swipe to advance by one day, one hour, or another user-defined increment. The configurable increments may be stored in user preferences associated with the user's profile.

In some embodiments, the system may provide predictive scrolling based on the detected kinematic profile. For example, if the kinematic profile indicates a power swipe gesture, the system may anticipate that the user intends to navigate to a distant date and may pre-load or pre-render UI elements corresponding to dates further in the future or past. This predictive behavior may reduce latency and improve the responsiveness of the user interface. In some embodiments, the watch face displayed in the first UI display 302a and the second UI display 302b may include additional contextual information that changes based on the selected date. For example, when the UI selector 304 is positioned on a date that includes a calendar event, the watch face may display an indicator (e.g., a dot, highlight, or text preview) associated with the event. As the UI selector 304 moves through dates in response to the swipe gesture, the contextual information may update dynamically.

In some embodiments, the system may support gesture chaining, where multiple swipe gestures performed in rapid succession are combined to produce a cumulative navigation effect. For example, if the user performs two consecutive power swipe gestures, the UI selector 304 may advance by two months (e.g., from December to February). The system may detect the consecutive gestures based on the timing between gesture completions and combine their effects accordingly. In some embodiments, the system may implement boundary behavior when the UI selector 304 reaches the beginning or end of a navigable range. For example, when navigating a calendar and the UI selector 304 reaches December 31st, a subsequent forward swipe gesture may cause the UI selector 304 to wrap around to January 1st of the following year, or alternatively, the system may provide haptic or visual feedback indicating that the boundary has been reached without wrapping.

An arrow 306 indicates the direction of the user's swipe gesture performed by the thumb 134. The length of arrow 306 is proportional to the kinematic profile of the swipe gesture, such that a longer arrow represents a swipe with greater displacement, velocity, or force. In Figure 3A, the arrow 306 is depicted with a longer length, indicating that the swipe gesture is a power swipe that exceeds the kinematic profile threshold. The longer arrow 306 visually corresponds to the larger increment of movement (e.g., one full month) caused by the power swipe gesture, as demonstrated by the transition from the first UI display 302a to the second UI display 302b.

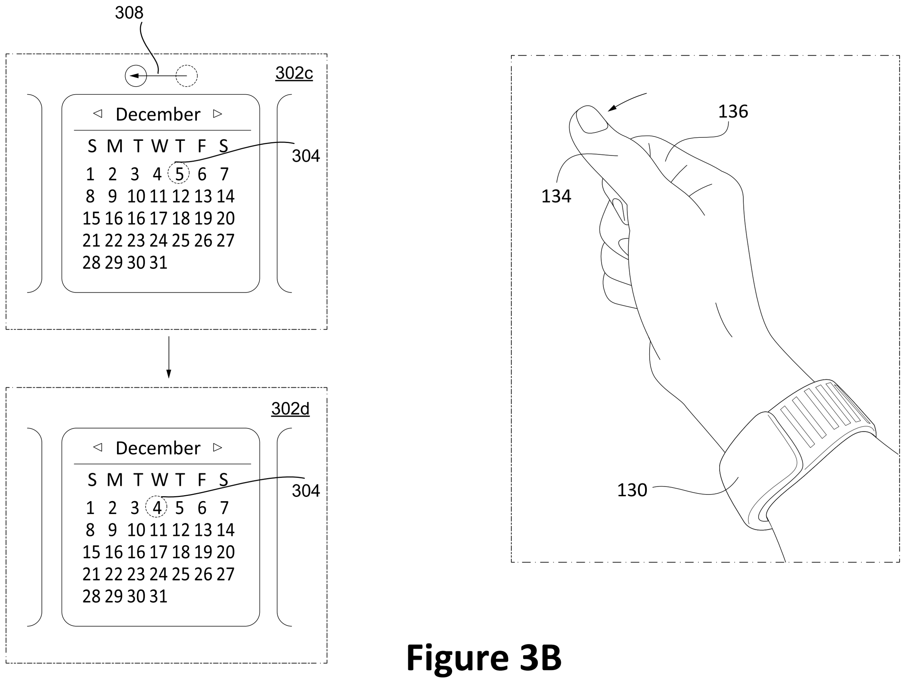

Figure 3B illustrates a user interface transition resulting from a non-power swipe gesture (e.g., a smaller swipe or gentle swipe) performed while wearing a wrist-wearable device 130, in accordance with some embodiments. The figure shows a user's hand with the thumb 134 and pointer finger 136 positioned to perform a swipe gesture. The thumb 134 is shown in proximity to the pointer finger 136, indicating the performance of a swipe hand gesture where the thumb 134 slides across or near the pointer finger 136 with a lower kinematic profile compared to the power swipe gesture described in connection with Figure 3A.

In the first UI display 302c, the UI selector 304 is positioned over the "5" of December 5th on the watch face. Following detection of a non-power swipe gesture, where the user's input does not exceed the kinematic profile threshold determined as described in connection with Figures 2A-2C, the second UI display 302d shows the UI selector 304 has moved incrementally by one day to the "4" of December 4th. The transition from the first UI display 302c to the second UI display 302d demonstrates that the non-power swipe gesture causes the UI selector 304 to move a smaller increment (e.g., one day) compared to the power swipe gesture described in Figure 3A, which causes the UI selector 304 to move a larger increment (e.g., one full month).

The swipe gesture is directional, such that swiping in a first direction (e.g., leftward) causes the UI selector 304 to move in a corresponding direction through the UI elements. For example, a leftward swipe causes the UI selector 304 to move from the "5" to the "4," while a rightward swipe would cause the UI selector 304 to move from the "5" to the "6." The kinematic profile of the non-power swipe gesture can be used to control scrolling through user interface elements, where the scrolling rate and increment are proportional to the detected kinematic profile of the gesture.

An arrow 308 indicates the direction of the user's swipe gesture performed by the thumb 134. The length of arrow 308 is proportional to the kinematic profile of the swipe gesture, such that a shorter arrow represents a swipe with lower displacement, velocity, or force. In Figure 3B, the arrow 308 is depicted with a shorter length, indicating that the swipe gesture is not a power swipe that exceeds the kinematic profile threshold. The shorter arrow 308 visually corresponds to the smaller increment of movement (e.g., one day) caused by the swipe gesture, as demonstrated by the transition from the UI display 302c to the UI display 302d.

Figure 3C illustrates a user interface displaying a calendar alongside a hand 132 wearing a wrist-wearable device 130 performing a swipe gesture, in accordance with some embodiments. The calendar displays a monthly view for December with dates arranged in a grid format. In the first UI display 302e, the UI selector 304 is positioned over the 25th of December, indicating the currently selected date. The hand 132 is shown performing a power gesture with the thumb 134 extended in an upward swiping motion. An arrow 310 indicates the direction and distance of the user's swipe gesture, with the length of arrow 310 being proportional to the kinematic profile of the gesture. In some embodiments, the power gesture uses a different kinematic profile threshold than the power swipe gesture described in connection with Figures 2A-2C, but the kinematic profile of the power gesture is still less than the kinematic profile threshold for the power swipe detected by the calibration module described in Figures 2A-2C.

In response to the power gesture detected by the wrist-wearable device 130, the UI selector 304 moves through the calendar dates proportionally to the kinematic profile of the gesture. In the second UI display 302f, the UI selector 304 has moved to December 5th, demonstrating that the upward swipe gesture caused the selection to move up multiple weeks (e.g., three weeks from the 25th to the 5th). The kinematic profile of the power gesture determines how many calendar dates are traversed, with a higher-intensity gesture causing the UI selector 304 to move through more dates than a lower-intensity gesture. In some embodiments, the UI selector 304 can move up additional weeks depending on the kinematic profile of the gesture, such that a gesture with a higher kinematic profile may cause the UI selector 304 to move four or more weeks in a single gesture.

Figure 3D illustrates a user interface displaying a calendar alongside a hand 132 wearing a wrist-wearable device 130 performing a smaller swipe gesture, in accordance with some embodiments. For example, the calendar displays a monthly view for December with dates arranged in a grid format. In the first UI display 302g, the UI selector 304 is positioned over the 25th of December, indicating the currently selected date. The hand 132 is shown performing a short upward gesture with the thumb 134 extended. An arrow 312 indicates the direction and distance of the user's swipe gesture, with the length of arrow 312 being proportional to the kinematic profile of the gesture. Because the gesture is small in magnitude, the arrow 312 is shorter than the arrow 310 shown in Figure 3C.

In response to the smaller swipe gesture detected by the wrist-wearable device 130, the UI selector 304 moves through the calendar dates proportionally to the kinematic profile of the gesture. Because the kinematic profile of the gesture is small, the UI selector 304 only moves up one week. In the second UI display 302h, the UI selector 304 has moved to December 18th, demonstrating that the short upward swipe gesture caused the selection to move up only one week (from the 25th to the 18th) compared to the power gesture in Figure 3C, which caused the UI selector 304 to move up three weeks. The difference in the number of dates traversed between Figures 3C and 3D illustrates how the kinematic profile of the swipe hand gesture is proportional to the number of UI elements (e.g., calendar dates) that are scrolled through, with a gentler swipe resulting in fewer dates being traversed.

Methods for scrolling through items on a screen using swipe gestures of different strengths, detected by sensors that read muscle signals are disclosed herein. The method further includes showing items on a display, collecting data from muscle sensors while the user swipes their thumb with different speeds or forces, and moving a selection highlight at speeds that match how hard or fast the user swiped including stronger swipes scroll through more items faster. Methods further include a setup process that uses statistical analysis to tell the difference between regular swipes and power swipes, as well as a wrist device with muscle sensors working together with a head-worn display that shows the screen.

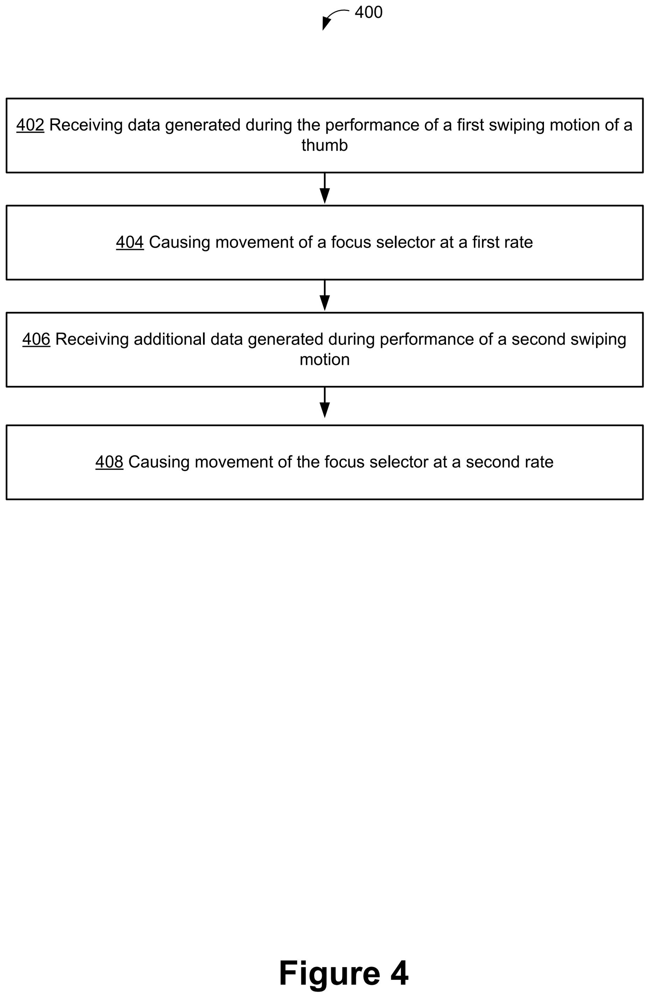

Figure 4 illustrates a method 400 for navigating through user interface elements using variable-magnitude swiping motions, in accordance with some embodiments. The method 400 may be performed by a system including a wrist-wearable device with one or more neuromuscular signal sensors and a head-wearable device configured to present a user interface.

At step 402, the system receives, via one or more neuromuscular signal sensors, data generated during performance of a first swiping motion of a thumb. The first swiping motion has a first kinematic state that may be characterized by one or more of a position, a velocity, an acceleration, or a displacement of the thumb during the swiping motion. As described in connection with Figures 1A-1D, the swiping motion may be performed by sliding the thumb 134 across the pointer finger 136 while wearing the wrist-wearable device 130.

At step 404, the system causes movement of a focus selector at a first rate through a first set of user interface elements based on the first kinematic state. The focus selector (e.g., UI selector 122) moves through the plurality of UI elements at a rate corresponding to the detected kinematic profile of the gesture. For example, a gentle swipe gesture with a lower kinematic profile causes the focus selector to move through a smaller number of UI elements.

At step 406, the system receives, via the one or more neuromuscular signal sensors, additional data generated during performance of a second swiping motion of the thumb. The second swiping motion has a second kinematic state different from the first kinematic state, such as a higher velocity, greater displacement, or increased force.

At step 408, the system causes movement of the focus selector at a second rate through a second set of user interface elements based on the second kinematic state. The second rate is greater than the first rate when the second swiping motion has a higher kinematic profile than the first swiping motion, resulting in the focus selector traversing a larger number of user interface elements. As illustrated in Figures 3C and 3D, the kinematic profile of the swipe hand gesture is proportional to the number of UI elements that are scrolled through.

(A1) In some embodiments, a non-transitory computer-readable storage medium includes executable instructions that, when executed by one or more processors, cause the one or more processors to display a plurality of user interface (UI) elements at a user interface, obtain, via one or more neuromuscular signal sensors, data generated during performance of a first swiping motion of a thumb over an index finger, the first swiping motion having a first kinematic profile, and based on the first kinematic profile, cause movement of a focus selector at a first rate through a first set of the plurality of UI elements, wherein the first rate is associated with respective swiping motions below an intensity threshold. The instructions further cause the one or more processors to obtain, via the one or more neuromuscular signal sensors, additional data generated during performance of a second swiping motion of the thumb over the index finger, the second swiping motion having a second kinematic profile different than the first kinematic profile, and based on the second kinematic profile, cause movement of the focus selector at a second rate through a second set of the plurality of UI elements, wherein the second rate is greater than the first rate, wherein the second rate is proportional to an intensity associated with the second kinematic profile, and wherein the second set includes more UI elements than the first set. Figure 1A describes the plurality of UI elements in reference to UI elements 112-120 displayed in user interface 110, and Figure 1B describes the focus selector in reference to UI selector 122. Figures 1B-1D illustrate the thumb 134 performing swiping motions across the pointer finger 136 while wearing wrist-wearable device 130.

(A2) In some embodiments of A1, the instructions further cause the one or more processors to receive, via the one or more neuromuscular signal sensors, further data generated during performance of a third swiping motion of the thumb, the third swiping motion having a third kinematic profile different than the second kinematic profile, and based on the third kinematic profile, cause movement of the focus selector at a third rate through a third set of the plurality of UI elements, where the third rate is greater than the second rate, and where the third set includes more UI elements than the second set. This enables three or more different scrolling speeds corresponding to different gesture intensities.

(A3) In some embodiments of any of A1-A2, the first kinematic profile and the second kinematic profile are each based on one or more of a position, a velocity, an acceleration, or a displacement of the thumb during the respective swiping motion. As described in reference to Figures 1B-1D, the magnitude of the swipe hand gesture can be determined based on the kinematic state of the swiping motion of the thumb 134 over the pointer finger 136.

(A4) In some embodiments of any of A1-A3, the first swiping motion is in a first direction, and the second swiping motion is in the first direction. As illustrated in Figures 1B and 1C, the user can perform multiple swipe gestures in the same direction with different magnitudes.

(A4a) In some embodiments of any of A1-A4, the intensity threshold is associated with respective swiping motions in the first direction, and another intensity threshold is associated with respective swiping motions in a different direction than the first direction. As described in reference to Figures 2A-2C, the swipe hand gesture calibration module 208 can establish distinct thresholds for different swipe directions based on the natural differences in thumb movement when swiping inward versus outward.

(A5) In some embodiments of any of A1-A4, the instructions further cause the one or more processors to receive, via the one or more neuromuscular signal sensors, further data generated during performance of a third swiping motion of the thumb in a second direction opposite the first direction, and in accordance with a determination that the third swiping motion is in the second direction, one or more of: cause movement of the focus selector in a direction opposite to the movement caused by the first swiping motion, or cease the movement of the focus selector through the plurality of UI elements. Figure 1D illustrates the user performing a power swipe hand gesture in a direction opposite the direction shown in Figures 1B-1C.

(A6) In some embodiments of any of A1-A5, the instructions further cause the one or more processors to receive, via the one or more neuromuscular signal sensors, subsequent data generated during performance of a fourth swiping motion of the thumb in a third direction different from the first direction and the second direction, and in accordance with a determination that the fourth swiping motion is in the third direction, cause movement of the focus selector in a direction corresponding to the third direction. Figures 3C and 3D illustrate swipe gestures used to navigate calendar interfaces in different directions.

(A7) In some embodiments of any of A1-A6, the third direction is a diagonal direction, and causing movement of the focus selector in the direction corresponding to the third direction comprises causing movement of the focus selector through a two-dimensional arrangement of the plurality of UI elements. As shown in Figures 3C and 3D, the calendar interface represents a two-dimensional arrangement of UI elements where the focus selector can move through dates in multiple directions.

(A8) In some embodiments of any of A1-A7, the instructions further cause the one or more processors to detect, via the one or more neuromuscular signal sensors, a force applied by the thumb to a surface of an index finger during the first swiping motion, and in accordance with a determination that the force exceeds a force threshold, increase the first rate of movement of the focus selector. As described in reference to Figures 2A-2C, the swipe hand gesture calibration module 208 captures force measurements during swipe gestures.

(A9) In some embodiments of any of A1-A8, the instructions further cause the one or more processors to detect, via the one or more neuromuscular signal sensors, a compression force applied by the thumb against the index finger during the first swiping motion or the second swiping motion, and in accordance with a determination that the compression force exceeds a compression threshold, cause a modification to the movement of the focus selector, where the modification comprises one or more of increasing the first rate or the second rate, decreasing the first rate or the second rate, or stopping the movement of the focus selector.

(A10) In some embodiments of any of A1-A9, the instructions further cause the one or more processors to, while the thumb remains in contact with an index finger during the first swiping motion or the second swiping motion, detect, via the one or more neuromuscular signal sensors, a tap gesture performed by the thumb, and in response to detecting the tap gesture, select a UI element of the plurality of UI elements currently highlighted by the focus selector.

(A11) In some embodiments of any of A1-A10, the tap gesture is detected based on a transient increase in force applied by the thumb to the index finger during the first swiping motion or the second swiping motion.

(A12) In some embodiments of any of A1-A11, the user interface is presented at an extended-reality headset communicatively coupled to a wrist-wearable device that includes the one or more neuromuscular signal sensors, where the extended-reality headset is at least one of augmented-reality glasses or a mixed-reality headset. As described in reference to Figures 5A-5C-2, the AR device 528 or MR device 532 can present the user interface while the wrist-wearable device 526 detects hand gestures.

(B1) In some embodiments, a non-transitory computer-readable storage medium includes executable instructions that, when executed by one or more processors, cause the one or more processors to receive, via one or more neuromuscular signal sensors, a first set of calibration data generated during performance of one or more swipe hand gestures performed in response to a first type of gesture prompt, receive, via the one or more neuromuscular signal sensors, a second set of calibration data generated during performance of one or more other swipe hand gestures performed in response to a second type of gesture prompt, the second type of gesture prompt different than the first type of gesture prompt, and apply a bimodal distribution to the first set of calibration data and the second set of calibration data to determine an intensity threshold for differentiating the one or more other swipe hand gestures from the one or more swipe hand gestures. Figures 2A-2C illustrate the swipe hand gesture calibration module 208 capturing calibration data and applying a bimodal distribution to differentiate gentle swipe gestures from power swipe gestures.

(B2) In some embodiments of B1, the instructions further cause the one or more processors to, before receiving the first set of calibration data, display a swipe gesture calibration module configured to determine the intensity threshold for differentiating the one or more other swipe hand gestures from the one or more swipe hand gestures. Figure 2A describes the swipe gesture calibration module in reference to swipe hand gesture calibration module 208, which displays a graph and user interface 210 for guiding the user through the calibration process.

(C1) In some embodiments, a system comprises a wrist-wearable device including one or more neuromuscular signal sensors, and a head-wearable device configured to present a user interface including a plurality of user interface (UI) elements. The system is configured to receive, via the one or more neuromuscular signal sensors, data generated during performance of a first swiping motion of a thumb over an index finger, the first swiping motion having a first kinematic profile, and based on the first kinematic profile, cause movement of a focus selector at a first rate through a first set of the plurality of UI elements. The system is further configured to receive, via the one or more neuromuscular signal sensors, additional data generated during performance of a second swiping motion of the thumb over the index finger, the second swiping motion having a second kinematic profile different than the first kinematic profile, and based on the second kinematic profile, cause movement of the focus selector at a second rate through a second set of the plurality of UI elements, where the second rate is greater than the first rate, and where the second set includes more UI elements than the first set. As described in reference to Figures 5A-5C-2, the wrist-wearable device 526 and head-wearable devices such as AR device 528 or MR device 532 operate together to detect gestures and present user interfaces.

(C2) In some embodiments of C1, the system is further configured to receive, via the one or more neuromuscular signal sensors, further data generated during performance of a third swiping motion of the thumb, the third swiping motion having a third kinematic profile different than the second kinematic profile, and based on the third kinematic profile, cause movement of the focus selector at a third rate through a third set of the plurality of UI elements, where the third rate is greater than the second rate, and where the third set includes more UI elements than the second set.

(C3) In some embodiments of any of C1-C2, the first kinematic profile and the second kinematic profile are each based on one or more of a position, a velocity, an acceleration, or a displacement of the thumb during the respective swiping motion.

(C4) In some embodiments of any of C1-C3, the first swiping motion is in a first direction, and the second swiping motion is in the first direction.

(C5) In some embodiments of any of C1-C4, the system is further configured to receive, via the one or more neuromuscular signal sensors, further data generated during performance of a third swiping motion of the thumb in a second direction opposite the first direction, and in accordance with a determination that the third swiping motion is in the second direction, one or more of: cause movement of the focus selector in a direction opposite to the movement caused by the first swiping motion, or cease the movement of the focus selector through the plurality of UI elements.

(C6) In some embodiments of any of C1-C5, the system is further configured to detect, via the one or more neuromuscular signal sensors, a force applied by the thumb to a surface of an index finger during the first swiping motion, and in accordance with a determination that the force exceeds a force threshold, increase the first rate of movement of the focus selector.

(D1) In some embodiments, a non-transitory computer-readable storage medium includes executable instructions that, when executed by one or more processors, cause the one or more processors to display a plurality of user interface (UI) elements at a user interface, obtain, via one or more neuromuscular signal sensors, data generated during performance of an in-air hand gesture, and obtain a kinematic profile of a swiping motion of a thumb over an index finger performed as part of the in-air hand gesture. The instructions further cause the one or more processors to, in accordance with a determination that the kinematic profile of the swiping motion does not satisfy one or more intensity-based navigation criteria, cause movement of a focus selector through a set of the plurality of UI elements displayed in the user interface, where a number of elements in the set of elements is predefined with respect to respective gestures that do not satisfy the one or more intensity-based navigation criteria. The instructions further cause the one or more processors to obtain, via the one or more neuromuscular signal sensors, data generated during performance of another in-air hand gesture, obtain another kinematic profile of another swiping motion of the thumb over the index finger performed as part of the other in-air hand gesture, and in accordance with a determination that the other kinematic profile of the other swiping gesture satisfies the one or more intensity-based navigation criteria, cause movement of the focus selector at a rate through another set of the plurality of UI elements, where the rate is proportional to an intensity of the other in-air hand gesture that is identified in the other kinematic profile. As illustrated in Figures 3C and 3D, when a user performs a swipe gesture that does not meet the intensity threshold, the focus selector (e.g., UI selector 122) moves through a predefined number of calendar dates regardless of the gesture's specific intensity. In contrast, when the gesture satisfies the intensity-based navigation criteria (e.g., having a magnitude, distance, speed, or acceleration larger than a threshold), the focus selector moves proportionally to the detected intensity, enabling more efficient navigation through longer lists of UI elements.

(D2) In some embodiments of D1, the rate of movement of the focus selector corresponds to another number of elements in the other set of the plurality of UI elements, and the other number of elements is larger than the number of elements in the set of elements that the in-air hand gesture causes movement through. As described in reference to Figures 1B and 1C, when a power swipe hand gesture is performed, the UI selector 122 moves through a greater number of UI elements compared to when a gentle swipe hand gesture is performed.

(D3) In some embodiments of any of D1-D2, the in-air hand gesture and the other in-air hand gesture include respective swiping motions of the thumb in a first direction with respect to the index finger, and the one or more intensity-based navigation criteria are associated with in-air hand gestures that include motions of the thumb in the first direction. The intensity thresholds are direction-specific, such that the criteria for determining whether a leftward swipe satisfies the intensity-based navigation criteria may differ from the criteria for a rightward swipe. As described in reference to Figures 2A-2C, the swipe hand gesture calibration module 208 can establish distinct thresholds for different swipe directions based on the natural differences in thumb movement when swiping inward versus outward.

(D4) In some embodiments of any of D1-D3, the instructions further cause the one or more processors to obtain, via the one or more neuromuscular signal sensors, data generated during performance of an additional in-air hand gesture, obtain an additional kinematic profile of an additional swiping motion of the thumb over the index finger performed as part of the additional in-air hand gesture, where the additional swiping motion of the thumb over the index finger is in a second direction different than the first direction, and in accordance with a determination that the additional kinematic profile satisfies one or more other intensity-based navigation criteria associated with in-air hand gestures that include motions of the thumb in the second direction, cause corresponding movement of the focus selector, where the other one or more intensity-based navigation criteria are different than the one or more intensity-based navigation criteria associated with in-air hand gestures that include motions of the thumb in the first direction. Figure 1D illustrates the user performing a swipe hand gesture in a direction opposite the direction shown in Figures 1B-1C, demonstrating direction-specific gesture recognition.

(D5) In some embodiments of any of D1-D4, the rate of movement of the focus selector is based on one or more of a velocity of the swipe hand gesture, a force of the swipe hand gesture, an acceleration of the swipe hand gesture, and a displacement of the swipe hand gesture. As described in reference to Figures 1B-1D, the magnitude of the swipe hand gesture can be determined based on the kinematic state of the swiping motion of the thumb 134 over the pointer finger 136.

(D6) In some embodiments of any of D1-D5, the instructions further cause the one or more processors to, while the focus selector is moving through the other set of UI elements at the rate proportional to the intensity of the other in-air hand gesture, obtain, via the one or more neuromuscular signal sensors, data generated during performance of a further in-air hand gesture that includes movement of the thumb in a direction opposite a respective direction of the thumb movement of the other in-air hand gesture, and cease movement of the focus selector through the other set of respective UI elements of the plurality of UI elements. As described in reference to Figure 1D, when the user performs a swipe hand gesture in the opposite direction of the swipe hand gesture previously performed, the UI elements cease to scroll.

(D7) In some embodiments of any of D1-D6, in accordance with the focus selector being in a moving state during performance of the further in-air hand gesture, the further in-air hand gesture causes the ceasing of the movement of the focus selector irrespective of whether a respective kinematic profile of the further in-air hand gesture satisfies a respective one or more intensity-based navigation criteria. The gesture to cease movement is not compared against the intensity criteria; the opposite-direction gesture stops the movement regardless of its intensity or magnitude.

(E1) In some embodiments, a non-transitory computer-readable storage medium includes executable instructions that, when executed by one or more processors, cause the one or more processors to receive, via one or more neuromuscular signal sensors, a first set of calibration data generated during performance of one or more swipe hand gestures performed in response to a first type of gesture prompt, receive, via the one or more neuromuscular signal sensors, a second set of calibration data generated during performance of one or more other swipe hand gestures performed in response to a second type of gesture prompt, the second type of gesture prompt different than the first type of gesture prompt, and apply a bimodal distribution to the first set of calibration data and the second set of calibration data to determine an intensity threshold for differentiating the one or more other swipe hand gestures from the one or more swipe hand gestures. The calibration includes detecting thumb movements in different directions and establishing respective gesture profiles for each direction. Figures 2A-2C illustrate the swipe hand gesture calibration module 208 capturing calibration data and applying a bimodal distribution to differentiate gentle swipe gestures from power swipe gestures.

(E2) In some embodiments of E1, the instructions further cause the one or more processors to, before receiving the first set of calibration data, display a swipe gesture calibration module configured to determine the intensity threshold for differentiating the one or more other swipe hand gestures from the one or more swipe hand gestures. Figure 2A describes the swipe gesture calibration module in reference to swipe hand gesture calibration module 208, which displays a graph and user interface (UI) 210 for guiding the user through the calibration process.

### Example Extended-Reality Systems

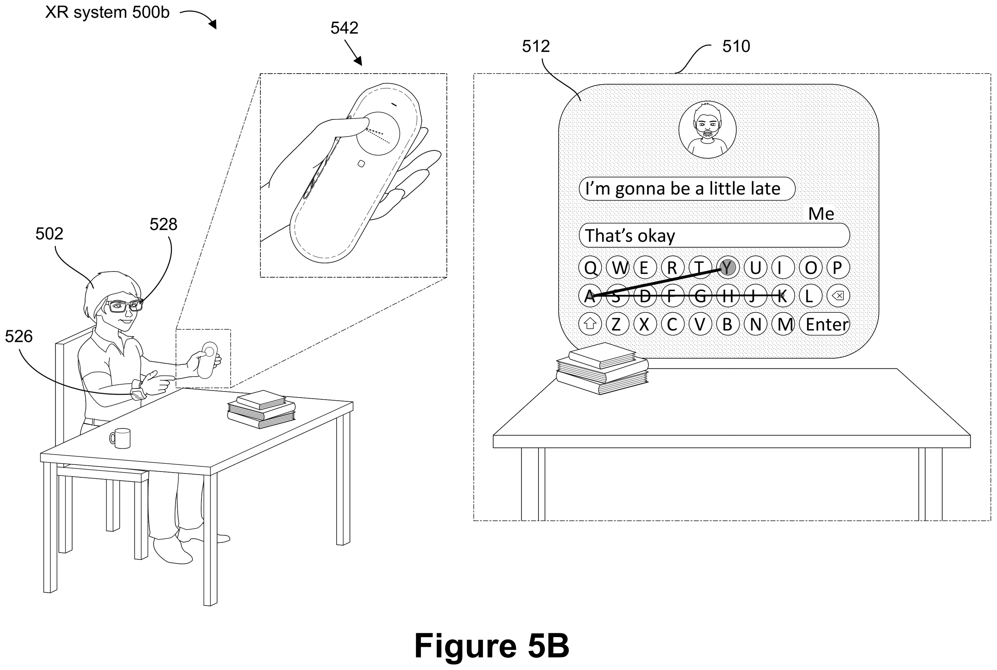

Figures 5A, 5B, 5C-1, and 5C-2, illustrate example XR systems that include AR and MR systems, in accordance with some embodiments. Figure 5A shows a first XR system 500a and first example user interactions using a wrist-wearable device 526, a head-wearable device (e.g., AR device 528), and/or a HIPD 542. Figure 5B shows a second XR system 500b and second example user interactions using a wrist-wearable device 526, AR device 528, and/or an HIPD 542. Figures 5C-1 and 5C-2 show a third MR system 500c and third example user interactions using a wrist-wearable device 526, a head-wearable device (e.g., an MR device such as a VR device), and/or an HIPD 542. As the skilled artisan will appreciate upon reading the descriptions provided herein, the above-example AR and MR systems (described in detail below) can perform various functions and/or operations.

The wrist-wearable device 526, the head-wearable devices, and/or the HIPD 542 can communicatively couple via a network 525 (e.g., cellular, near field, Wi-Fi, personal area network, wireless LAN). Additionally, the wrist-wearable device 526, the head-wearable device, and/or the HIPD 542 can also communicatively couple with one or more servers 530, computers 540 (e.g., laptops, computers), mobile devices 550 (e.g., smartphones, tablets), and/or other electronic devices via the network 525 (e.g., cellular, near field, Wi-Fi, personal area network, wireless LAN). Similarly, a smart textile-based garment, when used, can also communicatively couple with the wrist-wearable device 526, the head-wearable device(s), the HIPD 542, the one or more servers 530, the computers 540, the mobile devices 550, and/or other electronic devices via the network 525 to provide inputs.

Turning to Figure 5A, a user 502 is shown wearing the wrist-wearable device 526 and the AR device 528 and having the HIPD 542 on their desk. The wrist-wearable device 526, the AR device 528, and the HIPD 542 facilitate user interaction with an AR environment. In particular, as shown by the first AR system 500a, the wrist-wearable device 526, the AR device 528, and/or the HIPD 542 cause presentation of one or more avatars 504, digital representations of contacts 506, and virtual objects 508. As discussed below, the user 502 can interact with the one or more avatars 504, digital representations of the contacts 506, and virtual objects 508 via the wrist-wearable device 526, the AR device 528, and/or the HIPD 542. In addition, the user 502 is also able to directly view physical objects in the environment, such as a physical table 529, through transparent lens(es) and waveguide(s) of the AR device 528. Alternatively, an MR device could be used in place of the AR device 528 and a similar user experience can take place, but the user would not be directly viewing physical objects in the environment, such as table 529, and would instead be presented with a virtual reconstruction of the table 529 produced from one or more sensors of the MR device (e.g., an outward facing camera capable of recording the surrounding environment).

The user 502 can use any of the wrist-wearable device 526, the AR device 528 (e.g., through physical inputs at the AR device and/or built-in motion tracking of a user's extremities), a smart-textile garment, externally mounted extremity tracking device, the HIPD 542 to provide user inputs, etc. For example, the user 502 can perform one or more hand gestures that are detected by the wrist-wearable device 526 (e.g., using one or more EMG sensors and/or IMUs built into the wrist-wearable device) and/or AR device 528 (e.g., using one or more image sensors or cameras) to provide a user input. Alternatively, or additionally, the user 502 can provide a user input via one or more touch surfaces of the wrist-wearable device 526, the AR device 528, and/or the HIPD 542, and/or voice commands captured by a microphone of the wrist-wearable device 526, the AR device 528, and/or the HIPD 542. The wrist-wearable device 526, the AR device 528, and/or the HIPD 542 include an artificially intelligent digital assistant to help the user in providing a user input (e.g., completing a sequence of operations, suggesting different operations or commands, providing reminders, confirming a command). For example, the digital assistant can be invoked through an input occurring at the AR device 528 (e.g., via an input at a temple arm of the AR device 528). In some embodiments, the user 502 can provide a user input via one or more facial gestures and/or facial expressions. For example, cameras of the wrist-wearable device 526, the AR device 528, and/or the HIPD 542 can track the user 502's eyes for navigating a user interface.

The wrist-wearable device 526, the AR device 528, and/or the HIPD 542 can operate alone or in conjunction to allow the user 502 to interact with the AR environment. In some embodiments, the HIPD 542 is configured to operate as a central hub or control center for the wrist-wearable device 526, the AR device 528, and/or another communicatively coupled device. For example, the user 502 can provide an input to interact with the AR environment at any of the wrist-wearable device 526, the AR device 528, and/or the HIPD 542, and the HIPD 542 can identify one or more back-end and front-end tasks to cause the performance of the requested interaction and distribute instructions to cause the performance of the one or more back-end and front-end tasks at the wrist-wearable device 526, the AR device 528, and/or the HIPD 542. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 542 can perform the back-end tasks and provide the wrist-wearable device 526 and/or the AR device 528 operational data corresponding to the performed back-end tasks such that the wrist-wearable device 526 and/or the AR device 528 can perform the front-end tasks. In this way, the HIPD 542, which has more computational resources and greater thermal headroom than the wrist-wearable device 526 and/or the AR device 528, performs computationally intensive tasks and reduces the computer resource utilization and/or power usage of the wrist-wearable device 526 and/or the AR device 528.

In the example shown by the first AR system 500a, the HIPD 542 identifies one or more back-end tasks and front-end tasks associated with a user request to initiate an AR video call with one or more other users (represented by the avatar 504 and the digital representation of the contact 506) and distributes instructions to cause the performance of the one or more back-end tasks and front-end tasks. In particular, the HIPD 542 performs back-end tasks for processing and/or rendering image data (and other data) associated with the AR video call and provides operational data associated with the performed back-end tasks to the AR device 528 such that the AR device 528 performs front-end tasks for presenting the AR video call (e.g., presenting the avatar 504 and the digital representation of the contact 506).

In some embodiments, the HIPD 542 can operate as a focal or anchor point for causing the presentation of information. This allows the user 502 to be generally aware of where information is presented. For example, as shown in the first AR system 500a, the avatar 504 and the digital representation of the contact 506 are presented above the HIPD 542. In particular, the HIPD 542 and the AR device 528 operate in conjunction to determine a location for presenting the avatar 504 and the digital representation of the contact 506. In some embodiments, information can be presented within a predetermined distance from the HIPD 542 (e.g., within five meters). For example, as shown in the first AR system 500a, virtual object 508 is presented on the desk some distance from the HIPD 542. Similar to the above example, the HIPD 542 and the AR device 528 can operate in conjunction to determine a location for presenting the virtual object 508. Alternatively, in some embodiments, presentation of information is not bound by the HIPD 542. More specifically, the avatar 504, the digital representation of the contact 506, and the virtual object 508 do not have to be presented within a predetermined distance of the HIPD 542. While an AR device 528 is described working with an HIPD, an MR headset can be interacted with in the same way as the AR device 528.

User inputs provided at the wrist-wearable device 526, the AR device 528, and/or the HIPD 542 are coordinated such that the user can use any device to initiate, continue, and/or complete an operation. For example, the user 502 can provide a user input to the AR device 528 to cause the AR device 528 to present the virtual object 508 and, while the virtual object 508 is presented by the AR device 528, the user 502 can provide one or more hand gestures via the wrist-wearable device 526 to interact and/or manipulate the virtual object 508. While an AR device 528 is described working with a wrist-wearable device 526, an MR headset can be interacted with in the same way as the AR device 528.

### Integration of Artificial Intelligence with XR Systems

Figure 5A illustrates an interaction in which an artificially intelligent virtual assistant can assist in requests made by a user 502. The AI virtual assistant can be used to complete openended requests made through natural language inputs by a user 502. For example, in Figure 5A the user 502 makes an audible request 544 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 5A also illustrates an example neural network 552 used in Artificial Intelligence applications. Uses of Artificial Intelligence (AI) are varied and encompass many different aspects of the devices and systems described herein. AI capabilities cover a diverse range of applications and deepen interactions between the user 502 and user devices (e.g., the AR device 528, an MR device 532, the HIPD 542, the wrist-wearable device 526). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein, that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 502 can interact with an AI model through natural language inputs captured by a voice sensor, text inputs, or any other input modality that accepts natural language and/or a corresponding voice sensor module. In another instance, input is provided by tracking the eye gaze of a user 502 via a gaze tracker module. Additionally, the AI model can also receive inputs beyond those supplied by a user 502. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors" data can be retrieved entirely from a single device (e.g., AR device 528) or from multiple devices that are in communication with each other (e.g., a system that includes at least two of an AR device 528, an MR device 532, the HIPD 542, the wrist-wearable device 526, etc.). The AI model can also access additional information (e.g., one or more servers 530, the computers 540, the mobile devices 550, and/or other electronic devices) via a network 525.

A non-limiting list of AI-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, AI-enhanced functions are fully or partially executed on cloud-computing platforms communicatively coupled to the user devices (e.g., the AR device 528, an MR device 532, the HIPD 542, the wrist-wearable device 526) via the one or more networks. The cloud-computing platforms provide scalable computing resources, distributed computing, managed AI services, interference acceleration, pre-trained models, APIs, and/or other resources to support comprehensive computations required by the AI-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 528, an MR device 532, the HIPD 542, the wrist-wearable device 526), storage options of the external devices (servers, computers, mobile devices, etc.), and/or storage options of the cloud-computing platforms.

The AI-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 542), haptic feedback can provide information to the user 502. An AI model can also use the inputs described above to determine the appropriate modality and device(s) to present content to the user (e.g., a user walking on a busy road can be presented with an audio output instead of a visual output to avoid distracting the user 502).

### Example Augmented Reality Interaction

Figure 5B shows the user 502 wearing the wrist-wearable device 526 and the AR device 528 and holding the HIPD 542. In the second AR system 500b, the wrist-wearable device 526, the AR device 528, and/or the HIPD 542 are used to receive and/or provide one or more messages to a contact of the user 502. In particular, the wrist-wearable device 526, the AR device 528, and/or the HIPD 542 detect and coordinate one or more user inputs to initiate a messaging application and prepare a response to a received message via the messaging application.

In some embodiments, the user 502 initiates, via a user input, an application on the wrist-wearable device 526, the AR device 528, and/or the HIPD 542 that causes the application to initiate on at least one device. For example, in the second AR system 500b the user 502 performs a hand gesture associated with a command for initiating a messaging application (represented by messaging user interface 512); the wrist-wearable device 526 detects the hand gesture; and, based on a determination that the user 502 is wearing the AR device 528, causes the AR device 528 to present a messaging user interface 512 of the messaging application. The AR device 528 can present the messaging user interface 512 to the user 502 via its display (e.g., as shown by user 502's field of view 510). In some embodiments, the application is initiated and can be run on the device (e.g., the wrist-wearable device 526, the AR device 528, and/or the HIPD 542) that detects the user input to initiate the application, and the device provides another device operational data to cause the presentation of the messaging application. For example, the wrist-wearable device 526 can detect the user input to initiate a messaging application, initiate and run the messaging application, and provide operational data to the AR device 528 and/or the HIPD 542 to cause presentation of the messaging application. Alternatively, the application can be initiated and run at a device other than the device that detected the user input. For example, the wrist-wearable device 526 can detect the hand gesture associated with initiating the messaging application and cause the HIPD 542 to run the messaging application and coordinate the presentation of the messaging application.

Further, the user 502 can provide a user input provided at the wrist-wearable device 526, the AR device 528, and/or the HIPD 542 to continue and/or complete an operation initiated at another device. For example, after initiating the messaging application via the wrist-wearable device 526 and while the AR device 528 presents the messaging user interface 512, the user 502 can provide an input at the HIPD 542 to prepare a response (e.g., shown by the swipe gesture performed on the HIPD 542). The user 502's gestures performed on the HIPD 542 can be provided and/or displayed on another device. For example, the user 502's swipe gestures performed on the HIPD 542 are displayed on a virtual keyboard of the messaging user interface 512 displayed by the AR device 528.

In some embodiments, the wrist-wearable device 526, the AR device 528, the HIPD 542, and/or other communicatively coupled devices can present one or more notifications to the user 502. The notification can be an indication of a new message, an incoming call, an application update, a status update, etc. The user 502 can select the notification via the wrist-wearable device 526, the AR device 528, or the HIPD 542 and cause presentation of an application or operation associated with the notification on at least one device. For example, the user 502 can receive a notification that a message was received at the wrist-wearable device 526, the AR device 528, the HIPD 542, and/or other communicatively coupled device and provide a user input at the wrist-wearable device 526, the AR device 528, and/or the HIPD 542 to review the notification, and the device detecting the user input can cause an application associated with the notification to be initiated and/or presented at the wrist-wearable device 526, the AR device 528, and/or the HIPD 542.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 528 can present to the user 502 game application data and the HIPD 542 can use a controller to provide inputs to the game. Similarly, the user 502 can use the wrist-wearable device 526 to initiate a camera of the AR device 528, and the user can use the wrist-wearable device 526, the AR device 528, and/or the HIPD 542 to manipulate the image capture (e.g., zoom in or out, apply filters) and capture image data.

While an AR device 528 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 5C-1 and 5C-2, the user 502 is shown wearing the wrist-wearable device 526 and an MR device 532 (e.g., a device capable of providing either an entirely VR experience or an MR experience that displays object(s) from a physical environment at a display of the device) and holding the HIPD 542. In the third AR system 500c, the wrist-wearable device 526, the MR device 532, and/or the HIPD 542 are used to interact within an MR environment, such as a VR game or other MR/VR application. While the MR device 532 presents a representation of a VR game (e.g., first MR game environment 520) to the user 502, the wrist-wearable device 526, the MR device 532, and/or the HIPD 542 detect and coordinate one or more user inputs to allow the user 502 to interact with the VR game.

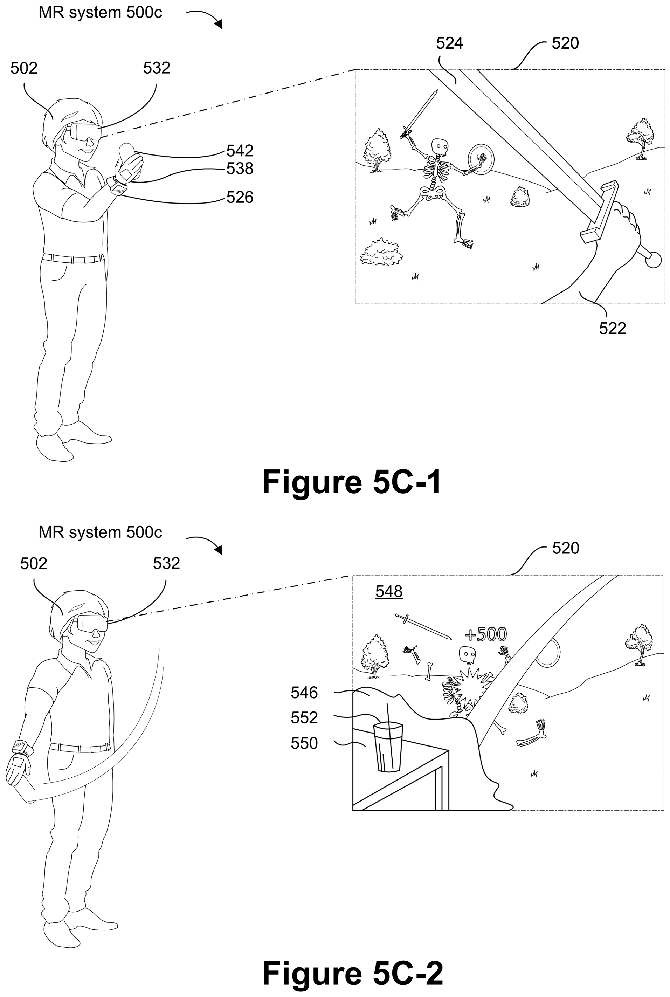

In some embodiments, the user 502 can provide a user input via the wrist-wearable device 526, the MR device 532, and/or the HIPD 542 that causes an action in a corresponding MR environment. For example, the user 502 in the third MR system 500c (shown in Figure 5C-1) raises the HIPD 542 to prepare for a swing in the first MR game environment 520. The MR device 532, responsive to the user 502 raising the HIPD 542, causes the MR representation of the user 522 to perform a similar action (e.g., raise a virtual object, such as a virtual sword 524). In some embodiments, each device uses respective sensor data and/or image data to detect the user input and provide an accurate representation of the user 502's motion. For example, image sensors (e.g., SLAM cameras or other cameras) of the HIPD 542 can be used to detect a position of the HIPD 542 relative to the user 502's body such that the virtual object can be positioned appropriately within the first MR game environment 520; sensor data from the wrist-wearable device 526 can be used to detect a velocity at which the user 502 raises the HIPD 542 such that the MR representation of the user 522 and the virtual sword 524 are synchronized with the user 502's movements; and image sensors of the MR device 532 can be used to represent the user 502's body, boundary conditions, or real-world objects within the first MR game environment 520.

In Figure 5C-2, the user 502 performs a downward swing while holding the HIPD 542. The user 502's downward swing is detected by the wrist-wearable device 526, the MR device 532, and/or the HIPD 542 and a corresponding action is performed in the first MR game environment 520. In some embodiments, the data captured by each device is used to improve the user's experience within the MR environment. For example, sensor data of the wrist-wearable device 526 can be used to determine a speed and/or force at which the downward swing is performed and image sensors of the HIPD 542 and/or the MR device 532 can be used to determine a location of the swing and how it should be represented in the first MR game environment 520, which, in turn, can be used as inputs for the MR environment (e.g., game mechanics, which can use detected speed, force, locations, and/or aspects of the user 502's actions to classify a user's inputs (e.g., user performs a light strike, hard strike, critical strike, glancing strike, miss) or calculate an output (e.g., amount of damage)).

Figure 5C-2 further illustrates that a portion of the physical environment is reconstructed and displayed at a display of the MR device 532 while the MR game environment 520 is being displayed. In this instance, a reconstruction of the physical environment 546 is displayed in place of a portion of the MR game environment 520 when object(s) in the physical environment are potentially in the path of the user (e.g., a collision with the user and an object in the physical environment are likely). Thus, this example MR game environment 520 includes (i) an immersive VR portion 548 (e.g., an environment that does not have a corollary counterpart in a nearby physical environment) and (ii) a reconstruction of the physical environment 546 (e.g., table 550 and cup 552). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 526, the MR device 532, and/or the HIPD 542 are described as detecting user inputs, in some embodiments, user inputs are detected at a single device (with the single device being responsible for distributing signals to the other devices for performing the user input). For example, the HIPD 542 can operate an application for generating the first MR game environment 520 and provide the MR device 532 with corresponding data for causing the presentation of the first MR game environment 520, as well as detect the user 502's movements (while holding the HIPD 542) to cause the performance of corresponding actions within the first MR game environment 520. Additionally, or alternatively, in some embodiments, operational data (e.g., sensor data, image data, application data, device data, and/or other data) of one or more devices is provided to a single device (e.g., the HIPD 542) to process the operational data and cause respective devices to perform an action associated with processed operational data.

In some embodiments, the user 502 can wear a wrist-wearable device 526, wear an MR device 532, wear smart textile-based garments 538 (e.g., wearable haptic gloves), and/or hold an HIPD 542 device. In this embodiment, the wrist-wearable device 526, the MR device 532, and/or the smart textile-based garments 538 are used to interact within an MR environment (e.g., any AR or MR system described above in reference to Figures 5A- 5B). While the MR device 532 presents a representation of an MR game (e.g., second MR game environment 520) to the user 502, the wrist-wearable device 526, the MR device 532, and/or the smart textile-based garments 538 detect and coordinate one or more user inputs to allow the user 502 to interact with the MR environment.

In some embodiments, user 502 can provide a user input via the wrist-wearable device 526, an HIPD 542, the MR device 532, and/or the smart textile-based garments 538 that causes an action in a corresponding MR environment. In some embodiments, each device uses respective sensor data and/or image data to detect the user input and provide an accurate representation of the user 502's motion. While four different input devices are shown (e.g., a wrist-wearable device 526, an MR device 532, an HIPD 542, and a smart textile-based garment 538) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 538) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 538 can be used in conjunction with an MR device and/or an HIPD 542.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 5A-5C-2 provided above are intended to augment the description provided in reference to Figures 1A-3D. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A non-transitory computer-readable storage medium, comprising executable instructions, that when executed by one or more processors, cause the one or more processors to perform:
displaying a plurality of user interface, UI, elements at a user interface;
obtaining, via one or more neuromuscular signal sensors, data generated during performance of a first swiping motion of a thumb over an index finger, the first swiping motion having a first kinematic profile;
based on the first kinematic profile, causing movement of a focus selector at a first rate through a first set of the plurality of UI elements, wherein the first rate is associated with respective swiping motions below an intensity threshold;
obtaining, via the one or more neuromuscular signal sensors, additional data generated during performance of a second swiping motion of the thumb over the index finger, the second swiping motion having a second kinematic profile different than the first kinematic profile; and
based on the second kinematic profile, causing movement of the focus selector at a second rate through a second set of the plurality of UI elements, wherein the second rate is greater than the first rate, and wherein the second rate is proportional to an intensity associated with the second kinematic profile, and wherein the second set includes more UI elements than the first set.

2. The non-transitory computer-readable storage medium of claim 1, further comprising executable instructions that cause the one or more processors to perform:
receiving, via the one or more neuromuscular signal sensors, further data generated during performance of a third swiping motion of the thumb, the third swiping motion having a third kinematic profile different than the second kinematic profile; and
based on the third kinematic profile, causing movement of the focus selector at a third rate through a third set of the plurality of UI elements, wherein the third rate is greater than the second rate, and wherein the third set includes more UI elements than the second set.

3. The non-transitory computer-readable storage medium of claim 1 or claim 2, wherein the first kinematic profile and the second kinematic profile are each based on one or more of a position, a velocity, an acceleration, or a displacement of the thumb during the respective swiping motion.

4. The non-transitory computer-readable storage medium of any preceding claim, wherein the first swiping motion is in a first direction, and wherein the second swiping motion is in the first direction,
and optionally wherein:
the intensity threshold is associated with respective swiping motions in the first direction, and
another intensity threshold is associated with respective swiping motions in a different direction than the first direction.

5. The non-transitory computer-readable storage medium of claim 4, further comprising executable instructions that cause the one or more processors to perform:
receiving, via the one or more neuromuscular signal sensors, further data generated during performance of a third swiping motion of the thumb in a second direction opposite the first direction; and
in accordance with a determination that the third swiping motion is in the second direction, one or more of:
causing movement of the focus selector in a direction opposite to the movement caused by the first swiping motion; or
ceasing the movement of the focus selector through the plurality of UI elements,
and optionally:
further comprising executable instructions that cause the one or more processors to perform:
receiving, via the one or more neuromuscular signal sensors, subsequent data generated during performance of a fourth swiping motion of the thumb in a third direction different from the first direction and the second direction; and
in accordance with a determination that the fourth swiping motion is in the third direction, causing movement of the focus selector in a direction corresponding to the third direction,
and further optionally:
wherein the third direction is a diagonal direction, and wherein causing movement of the focus selector in the direction corresponding to the third direction comprises causing movement of the focus selector through a two-dimensional arrangement of the plurality of UI elements.

6. The non-transitory computer-readable storage medium of any preceding claim, further comprising executable instructions that cause the one or more processors to perform:
detecting, via the one or more neuromuscular signal sensors, a force applied by the thumb to a surface of the index finger during the first swiping motion; and
in accordance with a determination that the force exceeds a force threshold, increasing the first rate of movement of the focus selector.

7. The non-transitory computer-readable storage medium of any preceding claim, further comprising executable instructions that cause the one or more processors to perform:
detecting, via the one or more neuromuscular signal sensors, a compression force applied by the thumb against the index finger during the first swiping motion or the second swiping motion; and
in accordance with a determination that the compression force exceeds a compression threshold, causing a modification to the movement of the focus selector, wherein the modification comprises one or more of increasing the first rate or the second rate, decreasing the first rate or the second rate, or stopping the movement of the focus selector.

8. The non-transitory computer-readable storage medium of any preceding claim, further comprising executable instructions that cause the one or more processors to perform:
while the thumb remains in contact with the index finger during the first swiping motion or the second swiping motion, detecting, via the one or more neuromuscular signal sensors, a tap gesture performed by the thumb; and
in response to detecting the tap gesture, selecting a UI element of the plurality of UI elements currently highlighted by the focus selector,
and optionally:
wherein the tap gesture is detected based on a transient increase in force applied by the thumb to the index finger during the first swiping motion or the second swiping motion.

9. The non-transitory computer-readable storage medium of any preceding claim, wherein the user interface is presented at an extended-reality headset communicatively coupled to a wrist-wearable device that includes the one or more neuromuscular signal sensors, wherein the extended-reality headset is at least one of augmented-reality glasses or a mixed-reality headset.

10. A non-transitory computer-readable storage medium, comprising executable instructions, that when executed by one or more processors, cause the one or more processors to perform:
receiving, via one or more neuromuscular signal sensors, a first set of calibration data generated during performance of one or more swipe hand gestures performed in response to a first type of gesture prompt;
receiving, via the one or more neuromuscular signal sensors, a second set of calibration data generated during performance of one or more other swipe hand gestures performed in response to a second type of gesture prompt, the second type of gesture prompt different than the first type of gesture prompt; and
applying a bimodal distribution to the first set of calibration data and the second set of calibration data to determine an intensity threshold for differentiating the one or more other swipe hand gestures from the one or more swipe hand gestures.

11. The non-transitory computer-readable storage medium of claim 10, further comprising executable instructions that cause the one or more processors to perform:
before receiving the first set of calibration data, displaying a swipe gesture calibration module configured to determine the intensity threshold for differentiating the one or more other swipe hand gestures from the one or more swipe hand gestures.

12. A system comprising:
a wrist-wearable device including one or more neuromuscular signal sensors; and
a head-wearable device configured to present a user interface including a plurality of user interface, UI, elements;
wherein the system is configured to:
receive, via the one or more neuromuscular signal sensors, data generated during performance of a first swiping motion of a thumb over an index finger, the first swiping motion having a first kinematic profile;
based on the first kinematic profile, cause movement of a focus selector at a first rate through a first set of the plurality of UI elements;
receive, via the one or more neuromuscular signal sensors, additional data generated during performance of a second swiping motion of the thumb over the index finger, the second swiping motion having a second kinematic profile different than the first kinematic profile; and
based on the second kinematic profile, cause movement of the focus selector at a second rate through a second set of the plurality of UI elements, wherein the second rate is greater than the first rate, and wherein the second set includes more UI elements than the first set.

13. The system of claim 12, wherein the system is further configured to:
receive, via the one or more neuromuscular signal sensors, further data generated during performance of a third swiping motion of the thumb, the third swiping motion having a third kinematic profile different than the second kinematic profile; and
based on the third kinematic profile, cause movement of the focus selector at a third rate through a third set of the plurality of UI elements, wherein the third rate is greater than the second rate, and wherein the third set includes more UI elements than the second set.

14. The system of claim 12 or claim 13, wherein:
the first kinematic profile and the second kinematic profile are each based on one or more of a position, a velocity, an acceleration, or a displacement of the thumb during the respective swiping motion,
and/or
the first swiping motion is in a first direction, and wherein the second swiping motion is in the first direction and the system is further configured to:
receive, via the one or more neuromuscular signal sensors, further data generated during performance of a third swiping motion of the thumb in a second direction opposite the first direction; and
in accordance with a determination that the third swiping motion is in the second direction, one or more of:
cause movement of the focus selector in a direction opposite to the movement caused by the first swiping motion; or
cease the movement of the focus selector through the plurality of UI elements.

15. The system of any of claims 12 to 14, wherein the system is further configured to:
detect, via the one or more neuromuscular signal sensors, a force applied by the thumb to a surface of the index finger during the first swiping motion; and
in accordance with a determination that the force exceeds a force threshold, increase the first rate of movement of the focus selector.
